(19) **Europäisches Patentamt European Patent Office Office européen des brevets**

(11) **EP 4 644 606 A1**

(12) **EUROPEAN PATENT APPLICATION**
published in accordance with Art. 153(4) EPC

(43) Date of publication:
05.11.2025 Bulletin 2025/45

(21) Application number: 23912168.4

(22) Date of filing: 26.12.2023

(51) International Patent Classification (IPC):
*D21H 19/84* (2006.01)   *B32B 27/10* (2006.01)
*B65D 65/42* (2006.01)   *D21H 15/02* (2006.01)
*D21H 19/20* (2006.01)   *D21H 19/56* (2006.01)
*D21H 19/82* (2006.01)   *D21H 21/18* (2006.01)
*D21H 27/10* (2006.01)

(52) Cooperative Patent Classification (CPC):
B32B 27/10; B65D 65/42; D21H 15/02;
D21H 19/20; D21H 19/56; D21H 19/82;
D21H 19/84; D21H 21/18; D21H 27/10

(86) International application number:
PCT/JP2023/046718

(87) International publication number:
WO 2024/143390 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.12.2022  JP 2022209438
27.12.2022  JP 2022209440

(71) Applicant: Oji Holdings Corporation
Chuo-ku
Tokyo 104-0061 (JP)

(72) Inventors:
• MIURA, Takahiro
Tokyo 104-0061 (JP)
• AKAI, Sawako
Tokyo 104-0061 (JP)
• TSUCHIMOTO, Masakazu
Tokyo 104-0061 (JP)
• MATSUMOTO, Ayaka
Tokyo 104-0061 (JP)

(74) Representative: Godemeyer Blum Lenze
Patentanwälte
Partnerschaft mbB - werkpatent
An den Gärten 7
51491 Overath (DE)

(54) **WATER-RESISTANT PAPER AND PACKAGING CONTAINER**

(57) The present invention relates to a water-resistant paper having heat-sealing properties, excellent water resistance and excellent oil resistance, and a packaging container obtained using the water-resistant paper. The water-resistant paper of the present invention comprises: a paper substrate; and an undercoat layer 1 and a water-resistant layer 1 on one surface of the paper substrate in the stated order from the paper substrate side, wherein an average Runkel ratio of pulp forming the paper substrate is 0.51 or less, wherein the undercoat layer 1 contains latex and a pigment, and wherein a coating amount of the water-resistant layer 1 is 4.5 $g/m^2$ or more.

EP 4 644 606 A1

**Description**

Technical Field

The present invention relates to a water-resistant paper and a packaging container obtained using the water-resistant paper.

Background Art

As various containers for drink, food and the like, and food cutleries (for example, chopsticks, spoons and forks), plastic products have been used, but a shift to paper products is desired for reduction of a burden on the environment.
Polyethylene laminated paper obtained by laminating a polyethylene film to one surface of substrate paper has been used for various containers for drink, food and the like, but has a problem that it is difficult to remove the polyethylene film for recycling, and recyclability are limited.
To address the problem, water resistance and the like have been imparted by impartment of performance in a papermaking process and impartment of performance by coating.
For providing packaging paper which can reduce the amount of plastic used, Japanese Patent No. 6580291 discloses packaging paper comprising at least one heat-sealing layer on at least one surface of a paper substrate, wherein the heat-sealing layer contains an ionomer, a coating amount of the heat-sealing layer on a dry basis is 2 to 10 $g/m^2$ in all layers, and the two or more heat-sealing layers are formed on at least one surface of the paper.

Summary of Invention

For the water-resistant paper disclosed in Japanese Patent No. 6580291, no consideration is given to the paper substrate, and it may fail to obtain sufficient water resistance and heat-sealing properties.
To address this, an object of the present invention is to provide water-resistant paper having heat-sealing properties, excellent water resistance, excellent oil resistance, and excellent recyclability, and a packaging container obtained using the water-resistant paper.
The present inventors have found that water-resistant paper comprising a water-resistant layer on at least one surface (for example, a surface to be contacted with a liquid) of a paper substrate, in which an average Runkel ratio of pulp forming the paper substrate is equal to or smaller than a specific value, an undercoat layer containing latex and a pigment is provided, and a coating amount of the water-resistant layer is equal to or larger than a specific value, gives a solution to the above-described problems, leading to completion of the present invention.
That is, the present invention relates to the following <1> to <18>.

<1> A water-resistant paper comprising: a paper substrate; and an undercoat layer 1 and a water-resistant layer 1 on one surface of a paper substrate in the stated order from the paper substrate side, wherein an average Runkel ratio of pulp forming the paper substrate is 0.51 or less, wherein the undercoat layer 1 comprises latex and a pigment, and wherein a coating amount of the water-resistant layer 1 is 4.5 $g/m^2$ or more.
<2> The water-resistant paper according to <1>, wherein a pulp raw material forming the paper substrate comprises at least one selected from the group consisting of bleached hardwood kraft pulp (LBKP) and bleached softwood kraft pulp (NBKP), and wherein a mass ratio of the bleached hardwood kraft pulp (LBKP) and the bleached softwood kraft pulp (NBKP) (LBKP/NBKP) is 60/40 or more and 100/0 or less.
<3> The water-resistant paper according to <1> or <2>, wherein in the undercoat layer 1, a mass ratio of the latex to the pigment (latex/pigment) is 10/90 or more and 40/60 or less.
<4> The water-resistant paper according to any one of <1> to <3>, wherein the water-resistant layer 1 comprises at least one selected from the group consisting of a polyolefin-based resin and an acryl-based resin.
<5> The water-resistant paper according to any one of <1> to <4>, wherein the paper substrate comprises a starch-based dry paper strengthening agent.
<6> The water-resistant paper according to any one of <1> to <5>, wherein a basis weight of the paper substrate is 200 $g/m^2$ or more.
<7> The water-resistant paper according to any one of <1> to <6>, wherein the water-resistant paper has a Cobb water absorptiveness of 10 $g/m^2$ or less on the surface having the water-resistant layer 1 when contacted with water at 20°C for 30 minutes.
<8> The water-resistant paper according to any one of <1> to <7>, wherein the water-resistant paper has a Cobb water absorptiveness of 20 $g/m^2$ or less on the surface having the water-resistant layer 1 when contacted with water at 90°C for 30 minutes.
<9> The water-resistant paper according to any one of <1> to <8>, wherein the water-resistant paper has a Kit value of 5 or more on the surface having the water-resistant layer 1.

<10> The water-resistant paper according to any one of <1> to <9>, which comprises, on the other surface of the paper substrate, at least one of an undercoat layer 2 and a water-resistant layer 2.

<11> The water-resistant paper according to <10>, which comprises, on the other surface of the paper substrate, the undercoat layer 2 and the water-resistant layer 2 in the stated order from the paper substrate side.

<12> The water-resistant paper according to <10> or <11>, wherein the undercoat layer 2 comprises latex and a pigment.

<13> The water-resistant paper according to any one of <10> to <12>, wherein the water-resistant layer 1 and the water-resistant layer 2 comprise aqueous resins of the same type.

<14> The water-resistant paper according to any one of <10> to <13>, wherein a coating amount of the water-resistant layer 2 is $5.0 \ g/m^2$ or less.

<15> The water-resistant paper according to any one of <10> to <14>, wherein a coating amount of the water-resistant layer 2 is $4 \ g/m^2$ or more.

<16> The water-resistant paper according to any one of <10> to <15>, wherein a total coating amount of the water-resistant layer 1 and the water-resistant layer 2 is $20 \ g/m^2$ or less.

<17> The water-resistant paper according to any one of <1> to <16>, which is used for a packaging container.

<18> A packaging container obtained using the water-resistant paper according to any one of <1> to <17>.

Description of Embodiments

[A water-resistant paper]

The water-resistant paper of the present embodiment is water-resistant paper comprising, on one surface of a paper substrate, an undercoat layer 1 and a water-resistant layer 1 in the stated order from the paper substrate side. The average Runkel ratio of pulp forming the paper substrate is 0.51 or less, the undercoat layer 1 contains latex and a pigment, and a coating amount of the water-resistant layer 1 is $4.5 \ g/m^2$ or more.

The water-resistant paper of the present embodiment has heat-sealing properties, excellent water resistance, excellent oil resistance, and excellent recyclability. Furthermore, the water-resistant paper of the present embodiment also has excellent moldability. As used herein, the term "moldability" means being excellent in top curl processability. Typically, in production of a packaging container including a top curl portion, the longitudinal direction of the water-resistant paper is a vertical direction of the container (that is, a direction in which curl occurs during the top curl process), and the lateral direction of the water-resistant paper is a horizontal direction of the container. Good heat-sealing properties ensure that during the top curl process, peeling of the heat-sealed portion of the top curl portion is suppressed, and excellent moldability is exhibited.

In the present embodiment, when use for packaging containers or the like is intended, the surface on which the water-resistant layer 1 is formed is preferably a surface which is in contact with the contents (a surface to be contacted with a liquid, a surface), and the opposite surface thereof is preferably a surface which undergoes printing (a print surface, a back surface). In the following description, for convenience, a surface of the water-resistant paper on which the water-resistant layer 1 is formed (one surface) is referred to as a surface to be contacted with a liquid or a surface, and the other surface is referred to as a print surface or a back surface.

The mechanism for exhibiting the above-described effects is unknown, but is presumed as follows.

The Runkel ratio of pulp is a value obtained by dividing a double of the pulp wall thickness by the diameter of the cavity of the pulp, and the smaller the Runkel ratio, the smaller the wall thickness of pulp with respect to the fiber diameter of the pulp. It is considered that by setting the average Runkel ratio such that the average Runkel ratio of pulp forming the paper substrate is 0.51 or less, the pulp is easily collapsed, and a paper substrate having high smoothness is obtained.

Furthermore, it is considered that by forming the undercoat layer 1 containing latex and a pigment on the paper substrate, the smoothness before the water-resistant layer 1 is provided is further improved, and the water-resistant layer 1 having little unevenness in formation thickness and the like is formed. Furthermore, by setting the coating amount of the water-resistant layer 1 to $4.5 \ g/m^2$ or more, occurrence of unevenness in formation thickness is suppressed on the entire surface of the water-resistant layer 1, and water-resistant paper having excellent water resistance and oil resistance is obtained. It is considered that if there is unevenness in thickness of the water-resistant layer 1, water resistance and oil resistance tend to deteriorate due to permeation of water and oil through a portion having a small thickness, and by suppressing thickness unevenness, water-resistant paper having excellent water resistance and oil resistance is obtained. Furthermore, it is considered that when the water-resistant layer 1 having little thickness unevenness is formed as described above, the resin contained in the water-resistant layer 1 is uniformly melted to bond the heat-seal surfaces sufficiently and uniformly during heat-sealing, and thus, excellent heat-sealing properties are obtained. Furthermore, in the water-resistant paper of the present invention, the smoothness before the water-resistant layer 1 is provided is further improved by forming the undercoat layer 1 on the paper substrate, so that the water-resistant layer 1 having little unevenness in formation thickness and the like can be formed with a relatively small amount of resin, and therefore, pulp is easily re-disintegrated to exhibit excellent recyclability (pulp recovery ratio after re-disintegration).

The effects of the present invention are not limited by the mechanism described above.

The longitudinal direction of the water-resistant paper means a direction corresponding to a papermaking direction (machine direction (MD)) of the paper substrate, and the lateral direction of the water-resistant paper means a direction corresponding to a width direction (cross direction (CD)) of the paper substrate.

Hereinafter, the configuration and physical properties of the water-resistant paper of the present embodiment will be described in more detail.

As used herein, the numerical range represented by "X to Y" means a numerical range including X as a lower limit value and Y as an upper limit value. When numerical ranges are written in series, the upper limits and the lower limits of each of the numerical ranges can be arbitrarily combined. The term "(meth)acryl" is a generic term including both acryl and methacryl.

<Paper substrate>

The paper substrate forming the water-resistant paper of the present embodiment may have a single-layered configuration or a multi-layered configuration. In the case of multi-layered paper, the number of paper layers is not particularly limited, and is, for example, preferably 3 or more and 7 or less, more preferably 4 or more, and further more preferably 5 or more. By setting the number of paper layers to 3 or more, a desired basis weight and paper thickness can be achieved, and the basis weight, freeness and the like of each layer can be adjusted to make the physical properties of the water-resistant paper fall within a desired range. The upper limit of the number of paper layers is preferably 6 or less.

In the present embodiment, the average Runkel ratio of pulp forming the paper substrate is 0.51 or less. When the average Runkel ratio of pulp forming the paper substrate is 0.51 or less, the paper substrate obtained has excellent smoothness, and as a result, a water-resistant layer having reduced thickness unevenness is obtained, so that water-resistant paper having excellent heat-sealing properties and excellent water resistance and oil resistance is obtained.

The average Runkel ratio of pulp forming the paper substrate is preferably 0.20 or more and 0.48 or less, more preferably 0.45 or less, and further more preferably 0.42 or less, and more preferably 0.26 or more, and further more preferably 0.32 or more. The average Runkel ratio of pulp forming the paper substrate is preferably equal to or smaller than the above-described upper limit value from the viewpoint of obtaining water-resistant paper having excellent heat-sealing properties, water resistance and oil resistance, and preferably equal to or larger than the above-described lower limit value from the viewpoint of obtaining necessary paper strength as water-resistant paper, and ease of production.

Here, the Runkel ratio is expressed by the following expression when the fiber diameter of pulp fiber is R and the lumen diameter is r.

$$\text{Runkel ratio} = (R-r)/r$$

Here, the fiber diameter R of pulp fiber and the lumen diameter r are calculated from the following expression by circle approximation.

When the length of the outer circumference of the fiber wall is X, and the fiber wall cross-section area is S, the pulp fiber radius A (i.e., R/2) and the fiber inner cavity radius B (i.e., r/2) are given by the following expressions.

$$A = X/(2\pi)$$

$$B = \{(\pi A^2 - S)/\pi\}^{1/2}$$

That is, the fiber wall thickness with respect to the fiber diameter of pulp becomes smaller as the Runkel ratio decreases, and it is considered that pulp having a small Runkel ratio is easily collapsed by an external force, and provides a smoother paper substrate. Therefore, when a paper substrate is prepared using a pulp raw material having a small average Runkel ratio, a paper substrate having excellent smoothness is obtained.

The average Runkel ratio is an average Runkel ratio of pulp forming the paper substrate of the water-resistant paper, and is measured by disintegrating the pulp from the water-resistant paper obtained, and using the disintegrated pulp. The average Runkel ratio of pulp forming the paper substrate is hardly changed by papermaking and disintegration, and therefore can be approximated by the average Runkel ratio of pulp which is a raw material.

The Runkel ratio varies depending on the type, production region and the like of pulp. In general, the Runkel ratio of bleached hardwood kraft pulp (LBKP) tends to be smaller than that of bleached softwood kraft pulp (NBKP). Raw material pulps to be used may be appropriately selected and combined so as to achieve a desired average Runkel ratio.

The average Runkel ratio is a mass weighted average value for pulps having various Runkel ratios.

The Runkel ratio is measured by the method described in Examples.

Examples of the pulp forming the paper substrate include chemical pulps such as bleached hardwood kraft pulp (LBKP) and bleached softwood kraft pulp (NBKP); mechanical pulps such as groundwood pulp (GP), pressure groundwood pulp (PGW), refiner mechanical pulp (RMP), thermomechanical pulp (TMP), chemi-thermomechanical pulp (CTMP), chemi-mechanical pulp (CMP) and chemi-groundwood pulp (CGP); wastepaper pulp; non-wood fiber pulps such as kenaf, bagasse, bamboo and cotton; and synthetic pulp. These pulps may be used alone, or used in combination of two or more thereof. Among these, from the viewpoint of obtaining a desired Runkel ratio and paper strength, the pulp raw material forming the paper substrate preferably contains at least one selected from the group consisting of LBKP and NBKP, it is more preferable to use LBKP alone, or use LBKP and NBKP in combination, and it is further more preferable to use LBKP and NBKP in combination.

As the raw material of LBKP, eucalyptus and acacia are exemplified.

As the raw material of NBKP, Radiata pine and Douglas fir are exemplified.

From the viewpoint of obtaining an appropriate paper strength as water-resistant paper for packaging containers and the viewpoint of obtaining water-resistant paper having excellent moldability, the Canadian standard freeness (CSF) of LBKP is preferably 300 mL or more and 600 mL or less, more preferably 325 mL or more, further more preferably 340 mL or more, even more preferably 350 mL or more, and still more preferably 380 mL or more, and more preferably 580 mL or less, further more preferably 560 mL or less, even more preferably 550 mL or less, still more preferably 540 mL or less, still further more preferably 520 mL or less, and particularly preferably 500 mL or less.

From the viewpoint of obtaining an appropriate paper strength as water-resistant paper for packaging containers and the viewpoint of obtaining water-resistant paper having excellent moldability, the Canadian standard freeness (CSF) of NBKP is preferably 350 mL or more and 700 mL or less, more preferably 400 mL or more, further more preferably 450 mL or more, and even more preferably 480 mL or more, and more preferably 675 mL or less, further more preferably 650 mL or less, and even more preferably 625 mL or less.

The Canadian standard freeness is measured according to JIS P 8121-2: 2012 "Pulps-Determination of drainability-Part 2: "Canadian Standard" freeness method".

Preferably, at least one selected from the group consisting of LBKP and NBKP is used as pulp forming the paper substrate, and the Runkel ratio of each of the pulps is in the above-described range. More preferably, the Runkel ratio and the Canadian standard freeness (CSF) of each of the pulps are in the above-described ranges.

As described above, the pulp raw material forming the paper substrate preferably contains at least one selected from the group consisting of LBKP and NBKP, and more preferably contains at least LBKP, and additionally, NBKP, and it is further more preferable to use LBKP and NBKP in combination. From the viewpoint of ensuring that the average Runkel ratio of pulp forming the paper substrate is in a desired range, obtaining an appropriate paper strength, and obtaining water-resistant paper having excellent moldability, the mass ratio of LBKP and NBKP (LBKP/NBKP) in the pulp raw material forming the paper substrate is preferably 60/40 or more and 100/0 or less, more preferably 65/35 or more, even more preferably 70/30 or more, and still more preferably 75/25 or more, and more preferably 90/10 or less, and further more preferably 85/15 or less.

Examples of additives for the paper substrate include pH adjusters (sodium hydrogencarbonate, sodium hydroxide and the like), dry paper strengthening agents, wet paper strengthening agents, internal sizing agents, filtrate yield improving agents, defoaming agents, fillers (calcium carbonate, talc and the like), dyes, and fixing agents (aluminum sulfate). These additives may be used alone, or used in combination of two or more thereof. The content of the additive is not particularly limited, and may be in a commonly adopted range.

As the dry paper strengthening agent, polyacrylamide (PAM)-based dry paper strengthening agents, starch-based dry paper strengthening agents, and CMC (carboxymethylcellulose) or salts thereof such as sodium carboxymethylcellulose, calcium carboxymethylcellulose, zinc carboxymethylcellulose and the like are typically exemplified, and the dry paper strengthening agent preferably contains a starch-based dry paper strengthening agent from the viewpoint of obtaining water-resistant paper having excellent heat-sealing properties, water resistance and oil resistance. When the paper substrate includes multiple paper layers, the dry paper strengthening agent may be contained in some layers, but is preferably contained in each layer, and it is more preferable that the content in each layer be in the following preferred range of contents.

The content of the starch-based dry paper strengthening agent in the dry paper strengthening agent is preferably 50 mass% or more, more preferably 75 mass% or more, and further more preferably 90 mass% or more and 100 mass% or less. Since the use of a polyacrylamide-based dry paper strengthening agent as a dry paper strengthening agent tends to deteriorate moldability, the content of the polyacrylamide-based dry paper strengthening agent in the dry paper strengthening agent is preferably 50 mass% or less, more preferably 20 mass% or less, and further more preferably 5 mass% or less, and it is particularly preferable that the polyacrylamide-based dry paper strengthening agent is not contained.

As the starch-based dry paper strengthening agent, cationized starch is exemplified. When a starch-based dry paper strengthening agent is used as a dry paper strengthening agent, the amount of cationized starch added is preferably 0.05 parts by mass or more and 2.0 parts by mass or less, more preferably 0.2 parts by mass or more, and further more preferably 0.5 parts by mass or more, and more preferably 1.5 parts by mass or less, and further more preferably 1.0 part by mass or less, per 100 parts by mass of raw material pulp (in terms of solid content), from the viewpoint of obtaining water-resistant paper having excellent moldability.

As the wet paper strengthening agent, polyamide polyamine epichlorohydrin resin (PAE), melamine-formaldehyde resin and urea-formaldehyde resin are exemplified, and among these, polyamide polyamine epichlorohydrin resin is preferable. When the paper substrate includes multiple paper layers, the wet paper strengthening agent may be contained in some layers, but is preferably contained in each layer, and it is more preferable that the content in each layer be in the following preferred range of contents.

The content of the wet paper strengthening agent per 100 parts by mass of raw material pulp is preferably 0.01 parts by mass or more and 1 part by mass or less, more preferably 0.03 parts by mass or more, further more preferably 0.05 parts by mass or more, and even more preferably 0.1 parts by mass or more, and more preferably 0.5 parts by mass or less, and further more preferably 0.3 parts by mass or less.

As the internal sizing agent, rosin-based internal sizing agents, alkyl ketene dimers and the like are exemplified, and among these, rosin-based sizing agents are preferable. Examples of the rosin-based sizing agent that can be used include acidic rosin-based sizing agents, weakly acidic rosin-based sizing agents, and neutral rosin-based sizing agents.

When the paper substrate includes multiple paper layers, the internal sizing agent may be contained in some layers, but is preferably contained in each layer, and it is more preferable that the content in each layer be in the following preferred range of contents.

The content of the internal sizing agent per 100 parts by mass of raw material pulp is preferably 0.1 parts by mass or more and 5 parts by mass or less, more preferably 0.3 parts by mass or more, and further more preferably 0.5 parts by mass or more, and more preferably 3 parts by mass or less, and further more preferably 1 part by mass or less.

The basis weight of the paper substrate is not particularly limited, but is preferably 180 $g/m^2$ or more and 430 $g/m^2$ or less, more preferably 200 $g/m^2$ or more, and further more preferably 220 $g/m^2$ or more, and more preferably 380 $g/m^2$ or less, further more preferably 330 $g/m^2$ or less, and even more preferably 280 $g/m^2$ or less when, for example, use for packaging containers, preferably for food containers, and more preferably for paper cups is intended. The basis weight of the paper substrate is preferably equal to or larger than the above-described lower limit value from the viewpoint of obtaining a paper strength as a packaging container, and preferably equal to or smaller than the above-described upper limit value from the viewpoint of obtaining water-resistant paper having excellent moldability. The basis weight of the paper substrate is measured according to JIS P 8124: 2011.

The paper thickness of the paper substrate is not particularly limited, but is preferably 210 $\mu$m or more and 480 $\mu$m or less, more preferably 230 $\mu$m or more, and further more preferably 240 $\mu$m or more, and more preferably 410 $\mu$m or less, further more preferably 380 $\mu$m or less, and even more preferably 330 $\mu$m or less when, for example, use for packaging containers, preferably for food containers, and more preferably for paper cups is intended. The paper thickness of the paper substrate is preferably equal to or larger than the above-described lower limit value from the viewpoint of obtaining a paper strength as a packaging container, and preferably equal to or smaller than the above-described upper limit value from the viewpoint of obtaining water-resistant paper having excellent moldability. The paper thickness of the paper substrate is measured according to JIS P 8118: 2014.

The density of the paper substrate is not particularly limited, but is preferably 0.4 $g/cm^3$ or more and 1.1 $g/cm^3$ or less, more preferably 0.6 $g/cm^3$ or more, and further more preferably 0.7 $g/cm^3$ or more, and more preferably 1.0 $g/cm^3$ or less, and further more preferably 0.95 $g/cm^3$ or less when, for example, use for packaging containers, preferably for paper cups is intended. The density of the paper substrate is preferably equal to or larger than the above-described lower limit value from the viewpoint of obtaining a paper strength as a packaging container, and preferably equal to or smaller than the above-described upper limit value from the viewpoint of flexibility in molding. The density of the paper substrate is calculated from the basis weight and the thickness of the paper substrate which are obtained by the measurement methods described above.

[Method for producing paper substrate]

Examples of the method for producing a paper substrate include a method in which paper is made from paper stock containing pulp. The paper stock may further contain additives. Examples of the additives include the additives listed above. The paper stock can be prepared by adding additives to a pulp slurry. The pulp slurry is obtained by beating pulp in the presence of water. The beating method and the beating apparatus for pulp are not particularly limited, and may be the same as a known beating method and beating apparatus. The content of pulp in the paper stock is not particularly limited, and may be in a commonly adopted range. The content of pulp is, for example, 60 mass% or more and less than 100 mass% with respect to the total mass of paper stock (solid content).

Paper can be made from paper stock by a conventional method. Examples thereof include a method in which paper stock is spread over a wire or the like, dried to obtain wet paper, a plurality of wet papers are stacked if necessary, and the resulting single-layered or multi-layered wet paper is pressed, and dried. Here, paper in a single-layered form is obtained in the case where a plurality of wet papers are not stacked, and paper in a multi-layered form is obtained in the case where a plurality of wet papers are stacked. In stacking of a plurality of wet papers, an adhesive may be applied to a surface of the wet paper (a surface on which another wet paper is stacked).

In the obtained paper substrate, there may be a difference in degree of smoothness between one surface and the other surface. In the present embodiment, it is preferable that the undercoat layer 1 and the water-resistant layer 1 be provided in the stated order on a smoother surface of the paper substrate to form a surface to be contacted with a liquid (surface) from the viewpoint of obtaining water-resistant paper having excellent heat-sealing properties, water resistance and oil resistance, and it is preferable that an undercoat layer 2 and a water-resistant layer 2 described later be provided in the stated order on a smoother surface of the paper substrate to form a print surface (back surface) from the viewpoint of obtaining water-resistant paper having excellent printability.

<Undercoat layer>

The water-resistant paper of the present embodiment comprises, on one surface of the paper substrate, for example, a surface to be contacted with a liquid (surface), the undercoat layer 1 and the water-resistant layer 1 in the stated order from the paper substrate side. Here, the term "surface to be contacted with a liquid" means a surface that is in contact with liquid, for example, a surface that is in contact with contents when the water-resistant paper is used for packaging containers. Here, the contents may be either liquid or non-liquid.

The undercoat layer 1 contains latex and a pigment.

The water-resistant paper of the present embodiment may comprise, on the other surface of the paper substrate, for example, a surface on a side opposite to the surface to be contacted with a liquid (print surface, back surface), at least one of the undercoat layer 2 and the water-resistant layer 2, further the undercoat layer 2 and the water-resistant layer 2 in the stated order from the paper substrate side.

Since the surface has the undercoat layer 1, water-resistant paper having better water resistance is obtained. When the back surface has the undercoat layer 2, printability is improved. On the surface, the undercoat layer 1 is provided between the paper substrate and the water-resistant layer 1. When the back surface has the undercoat layer 2, the water-resistant layer 2 may be laminated or the water-resistant layer 2 is not required to be laminated on the undercoat layer 2. In the water-resistant paper of the present embodiment, it is only required that at least one surface (surface to be contacted with a liquid) has the undercoat layer 1, and the other surface (print surface, back surface) is not required to have the undercoat layer 2, but preferably has the undercoat layer 2 from the viewpoint of heat-sealing properties, water resistance of the print surface, and moldability. When use for paper cups is intended, at least the surface to be contacted with a liquid is required to have the undercoat layer 1 and the water-resistant layer 1 from the paper substrate side from the viewpoint of water resistance. Furthermore, when use for paper cups for cold drink, it is preferable that the print surface also have the undercoat layer 2 and the water-resistant layer 2 from the viewpoint of dew condensation prevention and printability. Therefore, the water-resistant paper according to an embodiment of the present invention comprises an undercoat layer and a water-resistant layer in the stated order on both surfaces of the paper substrate. On the other hand, when use for paper cups for hot drink is intended, the print surface does not necessarily have a water-resistant layer because dew condensation resistance is not required. Therefore, the water-resistant paper according to another embodiment of the present invention comprises the undercoat layer 1 and the water-resistant layer 1 in the stated order on one surface (surface, surface to be contacted with a liquid) of the paper substrate, and does not comprise the water-resistant layer 2 on the other surface (back surface, print surface) of the paper substrate. When use for paper cups for hot drink is intended, the other surface (back surface, print surface) of the paper substrate may have the undercoat layer 2 from the viewpoint of printability. That is, the water-resistant paper according to another embodiment of the present invention comprises the undercoat layer 1 and the water-resistant layer 1 in the stated order on one surface (surface, surface to be contacted with a liquid) of the paper substrate, and the undercoat layer 2 on the other surface (back surface, print surface) of the paper substrate.

Preferably, the surface and the back surface have a water-resistant layer from the viewpoint of improving heat-sealing properties and moldability.

The number of undercoat layers may be one, or two or more per one surface. When the water-resistant paper comprises the undercoat layer, the number of undercoat layers is preferably one from the viewpoint of productivity, and may be two or more from the viewpoint of improving water resistance.

When one surface of the paper substrate has two or more undercoat layers, the compositions and the coating amounts of the undercoat layers may be the same or different. When one surface and the other surface of the paper substrate each have an undercoat layer, the compositions and the coating amounts of the undercoat layers may be the same or different.

In the following description, the term "undercoat layer 1" means an undercoat layer provided on a surface having the water-resistant layer 1 (surface, surface to be contacted with a liquid), and the term "undercoat layer 2" means an undercoat layer provided on a surface on a side opposite to the undercoat layer 1 (back surface, print surface). The term which is not distinctively written as the undercoat layer 1 or the undercoat layer 2 is a generic term of the undercoat layer 1 and the undercoat layer 2.

In the present embodiment, the undercoat layer 1 contains latex and a pigment. The undercoat layer 2 preferably contains latex and a pigment.

Hereinafter, the latex and the pigment that are contained in the undercoat layer will be described in detail.

[Latex]

In the present embodiment, the latex means a polymer which can be stably dispersed in water. The latex is typically emulsified and dispersed by a surfactant or the like.

The latex is not particularly limited as long as it allows the effects of the present invention to be exhibited, and specific examples thereof include conjugate diene-based polymers such as styrene-butadiene copolymers and acrylonitrile-butadiene copolymers; acryl-based polymers such as homopolymers of a (meth)acrylic acid ester, and copolymers of the (meth)acrylic acid ester and a monomer capable of being copolymerized therewith (for example, styrene-acryl-based copolymers and methyl methacrylate-butadiene copolymers); vinyl-based polymers such as ethylene-vinyl acetate copolymers and vinyl chloride-vinyl acetate; a polyurethane resin; and a natural rubber. These may be used alone, or used in combination of two or more thereof. Among these, from the view point of further improving water resistance and/or oil resistance, at least one selected from the group consisting of a styrene-butadiene copolymer and an acryl-based polymer is preferable, and an acryl-based polymer is more preferable, and a styrene-acryl-based copolymer is further more preferable.

The styrene-acryl-based copolymer is preferably a copolymer of styrene and a (meth)acrylic acid alkyl ester.

As the latex, either a commercially available product or a synthetic product may be used. Examples of the commercially available product include Acronal S728ap and Acronal S504ap manufactured by BASF, and LACSTAR 3307BE manufactured by DIC Corporation.

The glass transition temperature of the latex is not particularly limited, but is preferably -50°C or higher and 60°C or lower, more preferably -20°C or higher, and further more preferably 0°C or higher, and more preferably 40°C or lower, from the viewpoint of bonding strength between the water-resistant layer and the undercoat layer. For the glass transition temperature of the latex, a value determined by a differential scanning calorimetry (DSC) method is adopted.

In the undercoat layer, the mass ratio of the latex to the pigment (latex/pigment) is preferably 10/90 or more and 40/60 or less, more preferably 12/88 or more, and more preferably 35/65 or less, from the viewpoint of obtaining water-resistant paper having excellent heat-sealing properties, water resistance and oil resistance, and further more preferably 25/75 or less, and even more preferably 20/80 or less, from the viewpoint of improving operability (suppressing contamination of coating equipment).

[Pigment]

The pigment is not particularly limited, and examples thereof include inorganic pigments such as kaolin, clay, engineered kaolin, delaminated clay, baked clay, heavy calcium carbonate, light calcium carbonate, talc, titanium dioxide, barium sulfate, calcium sulfate, zinc oxide, silicic acid, silicic acid salts, colloidal silica and satin white; and organic pigments of solid type, hollow type or core-shell type. These may be used alone, or used in combination of two or more thereof. Among these, from the viewpoint of further improving water resistance and/or oil resistance, at least one selected from the group consisting of kaolin and calcium carbonate is preferable, it is more preferable that at least kaolin is contained, and it is further more preferable to use calcium carbonate and kaolin in combination.

When calcium carbonate and kaolin are used in combination, the mass ratio of calcium carbonate and kaolin (calcium carbonate/kaolin) is not particularly limited, but is preferably 50/50 or more and 90/10 or less, and more preferably 60/40 or more and 80/20 or less.

The average particle size of the pigment is not particularly limited, but is preferably 0.1 $\mu$m or more and 20 $\mu$m or less, and more preferably 0.5 $\mu$m or more, and more preferably 10 $\mu$m or less. The average particle size of the pigment can be determined using a laser diffraction particle size distribution measuring apparatus based on the principle of laser diffractometry. A value determined by the measured particle size distribution is adopted.

As the pigment, a pigment having an aspect ratio of 5 or more (pigment 1) and a pigment having an aspect ratio of less than 5 (pigment 2) are preferably used in combination from the viewpoint of improving the water resistance by the undercoat layer, and the viewpoint of adjustment of the viscosity of an undercoat layer coating solution, and cost.

The aspect ratio of the pigment 1 is preferably 5 or more and 500 or less, and more preferably 50 or more, and more preferably 300 or less. As the pigment having an aspect ratio as described above, kaolin is exemplified.

The aspect ratio of the pigment 2 is preferably 1 or more and less than 5, more preferably 4 or less, and more preferably 3.5 or less. As the pigment having an aspect ratio as described above, calcium carbonate is exemplified.

The aspect ratio of the pigment is a shape factor obtained by dividing an average particle size by an average thickness. For the average thickness, several droplets of a pigment diluted with a solvent or the like are dropped onto a glass substrate, and naturally dried and solidified. Using a transmission electron microscope, 20 spots of the pigment oriented on this glass substrate were extracted, and the thickness of each spot is measured. Of the 20 spots whose thickness is measured, top 3 spots and bottom 3 spots in terms of the thickness value are excluded, an average value of the thickness of the remaining 14 spots is determined, and the average value is taken as an average thickness.

In the undercoat layer, the total content of the pigment and the latex is preferably 50 mass% or more, more preferably 70 mass% or more, further more preferably 90 mass% or more, and even more preferably 95 mass% or more, and may be 100 mass%, from the viewpoint of water resistance and heat-sealing properties.

The undercoat layer may further contain components other than the latex and the pigment. Examples of the other components include adhesives, dispersants, thickeners, water retention agents, defoaming agents, water resistant additives, colorants, and surfactants. Examples of the adhesive include proteins such as casein, soy protein and synthetic proteins; starches such as oxidized starch, positive starch, urea-phosphate-esterified starch, etherified starch such as hydroxyethyl-etherified starch, and dextrin; and cellulose derivatives such as carboxymethylcellulose, hydroxyethylcellulose and hydroxymethylcellulose.

The coating amounts of the undercoat layer on the surface to be contacted with a liquid and the print surface may be the same or different. The coating amount of the undercoat layer per one surface is preferably 1 g/m$^2$ or more and 30 g/m$^2$ or less, more preferably 3 g/m$^2$ or more, further more preferably 4 g/m$^2$ or more, and even more preferably 5 g/m$^2$ or more, and more preferably 20 g/m$^2$ or less, and further more preferably 12 g/m$^2$ or less. The coating amount of the undercoat layer per one surface is preferably equal to or larger than the above-described lower limit value from the viewpoint of obtaining water-resistant paper having excellent heat-sealing properties, water resistance and oil resistance, and recyclability of pulp forming the paper substrate, and preferably equal to or smaller than the above-described upper limit value from the viewpoint of heat-sealing properties and cost.

From the viewpoint of obtaining water-resistant paper having particularly excellent printability, the coating amount of the undercoat layer on the surface to be contacted with a liquid is the same as the coating amount per one surface as described above, and the coating amount of the undercoat layer on the print surface is preferably 8 g/m$^2$ or more and 30 g/m$^2$ or less, more preferably 10 g/m$^2$ or more, and further more preferably 12 g/m$^2$ or more. The coating amount of the undercoat layer on the print surface is preferably equal to or larger than the above-described lower limit value from the viewpoint of printability, and preferably equal to or smaller than the above-described upper limit value from the viewpoint of heat-sealing properties and cost.

The method for forming the undercoat layer is not particularly limited. For example, an undercoat layer coating solution containing latex, a pigment, and other components if necessary is prepared, applied to a paper substrate, and dried to obtain the undercoat layer.

Preferably, a smoother surface of the paper substrate has the undercoat layer 1 and the water-resistant layer 1. Preferably, the smoother surface of the paper substrate is a surface to be contacted with a liquid (surface), and the undercoat layer 1 and the water-resistant layer 1 are formed in the stated order.

In the water-resistant paper of the present embodiment, the basis weight of a laminate of the paper substrate and the undercoat layer (hereinafter, also referred to as "undercoat paper") is not particularly limited, but is preferably 200 g/m$^2$ or more and 450 g/m$^2$ or less, more preferably 220 g/m$^2$ or more, and further more preferably 240 g/m$^2$ or more, and more preferably 400 g/m$^2$ or less, further more preferably 350 g/m$^2$ or less, and even more preferably 300 g/m$^2$ or less when for example, use for packaging containers, and preferably for paper cups is intended. The basis weight of the undercoat paper is preferably equal to or larger than the above-described lower limit value from the viewpoint of obtaining a paper strength as a packaging container, and preferably equal to or smaller than the above-described upper limit value from the viewpoint of moldability. The basis weight of the undercoat paper is measured according to JIS P 8124: 2011.

The thickness of the undercoat paper (paper thickness) is not particularly limited, but is preferably 230 $\mu$m or more and 500 $\mu$m or less, more preferably 250 $\mu$m or more, and further more preferably 260 $\mu$m or more, and more preferably 430 $\mu$m or less, further more preferably 400 $\mu$m or less, and even more preferably 350 $\mu$m or less when for example, use for packaging containers, and preferably for paper cups is intended. The thickness of the undercoat paper is preferably equal to or larger than the above-described lower limit value from the viewpoint of obtaining a paper strength as a packaging container, and preferably equal to or smaller than the above-described upper limit value from the viewpoint of moldability. The paper thickness of the undercoat paper is measured according to JIS P 8118: 2014.

The density of the undercoat paper is not particularly limited, but is preferably 0.4 g/cm$^3$ or more and 1.1 g/cm$^3$ or less, more preferably 0.6 g/cm$^3$ or more, and further more preferably 0.7 g/cm$^3$ or more, and more preferably 1.0 g/cm$^3$ or less, and further more preferably 0.95 g/cm$^3$ or less when for example, use for packaging containers, and preferably for paper cups is intended. The density of the undercoat paper is calculated from the basis weight and the thickness of the undercoat paper which are obtained by the measurement methods described above.

As described above, the undercoat layer 1 and the water-resistant layer 1 are preferably provided in the stated order on a smoother surface of the paper substrate from the viewpoint of obtaining water-resistant paper having excellent water resistance, heat-sealing properties and moldability. In this case, the Oken smoothness of a surface of the undercoat paper which has the water-resistant layer 1 (surface to be contacted with a liquid, surface) is preferably 20 seconds or more, more preferably 30 seconds or more, and further more preferably 45 seconds or more, and the upper limit thereof is not particularly limited, and is, for example, 1,000 seconds or less.

In the case described above, from the viewpoint of obtaining water-resistant paper having excellent heat-sealing properties and moldability and the viewpoint of being excellent in printability in the case where a print layer is formed, the Oken smoothness of a surface of the undercoat paper which has the water-resistant layer 2 (print surface, back surface) is preferably 10 seconds or more, more preferably 15 seconds or more, and further more preferably 20 seconds or more. The upper limit thereof is not particularly limited, and is, for example, 200 seconds or less.

As described above, the undercoat layer 2 and the water-resistant layer 2 are preferably provided in the stated order on a smoother surface of the paper substrate from the viewpoint of obtaining water-resistant paper having excellent printability. In this case, from the viewpoint of water resistance, the Oken smoothness of a surface of the undercoat paper which has the undercoat layer 1 is preferably 32 seconds or more, more preferably 35 seconds or more, and further more preferably 38 seconds or more. The upper limit of the Oken smoothness is not particularly limited, and is, for example, 100 seconds or less from the viewpoint of ease of production.

In the case described above, from the viewpoint of water resistance and printability, the Oken smoothness of a surface of the undercoat paper which has the undercoat layer 2 is preferably 52 seconds or more, more preferably 55 seconds or more, and further more preferably 58 seconds or more. The upper limit of the Oken smoothness is not particularly limited, and is, for example, 300 seconds or less from the viewpoint of being excellent in terms of ease of production.

The Oken smoothness of the undercoat paper can be adjusted to be within a desired range by, for example, the average Runkel ratio of pulp forming the paper substrate, the types of pigments and latex used for the undercoat layer 1 and the undercoat layer 2, the blending amounts thereof, and the coating amounts of the undercoat layer 1 and the undercoat layer 2.

The Oken smoothness is measured according to JIS P 8115: 2010.

<Water-resistant layer>

The water-resistant paper of the present embodiment comprises the water-resistant layer 1 on one surface (for example, surface to be contacted with a liquid) of the paper substrate.

In the water-resistant paper of the present embodiment, the water-resistant layer 1 is formed on the paper substrate with the undercoat layer 1 interposed therebetween. From the viewpoint of heat-sealing properties, the water-resistant layer is preferably provided on at least the uppermost layer of one surface of the paper substrate, and more preferably provided on at least the uppermost layer of the surface to be contacted with a liquid.

The water-resistant paper of the present embodiment may comprise one or more water-resistant layers on at least one surface of the paper substrate, or may comprise two or more water-resistant layers on at least one surface of the paper substrate. The number of water-resistant layers is preferably one from the viewpoint of productivity, and preferably two or more from the viewpoint of improving water resistance.

The water-resistant layer may be provided only on the surface to be contacted with a liquid (hereinafter, the surface to be contacted with a liquid is also referred to as a surface), and may be further provided on the back surface which is an opposite surface with respect to the paper substrate.

Furthermore, when use for applications where dew condensation occurs, like paper cups for cold water, is intended, a surface that corresponds to the outer side (a surface on a side opposite to the surface to be contacted with a liquid, also referred to a back surface or a print surface) preferably has one or more water-resistant layers, and may have two or more water-resistant layers. That is, the water-resistant paper of the present embodiment preferably comprises a water-resistant layer on both surfaces of the paper substrate, and preferably comprises the water-resistant layer 2 on the other surface of the paper substrate.

When one surface of the paper substrate has two or more water-resistant layers, the compositions and the coating amounts of the water-resistant layers may be the same or different. When one surface and the other surface of the paper substrate each have a water-resistant layer, the compositions and the coating amounts of the water-resistant layers may be the same or different.

In the following description, the term "water-resistant layer" which is not distinctively written as the water-resistant layer 1 or the water-resistant layer 2 is a generic term of the water-resistant layer 1 and the water-resistant layer 2.

The water-resistant layer preferably contains an aqueous resin. The term "aqueous resin" means a resin which can be dispersed or suspended in water.

Examples of the aqueous resin include polyolefin-based resins, and acryl-based resins, with ethylene-(meth) acrylic acid copolymers, styrene-acryl-based copolymers and ethylene-$\alpha$-olefin copolymers being exemplified. The number of carbon atoms in the $\alpha$-olefin is preferably 4 or more and 20 or less, more preferably 6 or more and 16 or less, and further more preferably 6 or more and 12 or less. Among these, from the viewpoint of water-resistance, heat-sealing properties and top curl processability, at least one selected from the group consisting of an ethylene-(meth)acrylic acid copolymer, a styrene-acryl-based copolymer and an ethylene-$\alpha$-olefin copolymer is preferably contained, an ethylene-(meth)acrylic acid copolymer or a styrene-acryl-based copolymer is more preferably contained, and an ethylene-(meth)acrylic acid copolymer is further more preferable. The aqueous resins may be used alone, or used in combination of two or more thereof.

The water-resistant layer 1 may contain an ethylene-(meth)acrylic acid copolymer, and when the water-resistant paper of the present embodiment comprises the water-resistant layer 2, the water-resistant layer 1 and the water-resistant layer 2 may contain an ethylene-(meth)acrylic acid copolymer.

From the viewpoint of obtaining a desired heat-sealing strength against peeling, when both the surface (surface to be contacted with a liquid) and the back surface (print surface) have a water-resistant layer, it is preferable that the water-resistant layers on both the surfaces have aqueous resins of the same type. When the aqueous resins on the surface and the back surface are of the same type, the heat-sealing strength against peeling tends to be improved.

Therefore, for example, when the water-resistant layer on the surface contains an ethylene-(meth)acrylic acid copolymer as the aqueous resin, and the back surface has a water-resistant layer, the water-resistant layer on the back surface preferably contains an ethylene-(meth)acrylic acid copolymer as an aqueous resin.

The water-resistant layers on both the surfaces may contain aqueous resins of different types, but it is preferable that the resins be similar in polarity from the viewpoint of the heat-sealing strength against peeling.

The ethylene-(meth)acrylic acid copolymer may be an ethylene-acrylic acid copolymer, or an ethylene-methacrylic acid copolymer. The styrene-acryl-based copolymer may be a styrene-(meth)acrylic acid alkyl ester copolymer.

As the aqueous resin, marketed products may be used. For example, AQUENCE EPIX BC 9220HS manufactured by Henkel Japan Ltd., MP498345N, MP4983R, MP4990R, 201103PX.S and MFHS1279 manufactured by Michelman Japan Limited, ZAIKTHENE (registered trademark) A and ZAIKTHENE (registered trademark) AC manufactured by Sumitomo Seika Chemicals Co., Ltd., CHEMIPEARL Series (S100, S300 and S500) manufactured by Mitsui Chemicals, Inc., MYE-30ER and MYE-30MAZ manufactured by Maruyoshi Chemical Co., Ltd., SURLYN Series manufactured by Du Pont, HIMILAN Series manufactured by DOW-MITSUI POLYCHEMICALS CO., LTD., HYPOD2000, RHOBARR320 and RHOBARR325 manufactured by Dow Chemical Japan Limited, HITECH SC-100 manufactured by TOHO Chemical Industry Co., Ltd., AQUATEX AC-3100 manufactured by CHUORIKA KOGYO Co., Ltd., AQUENCE EPIX BC900F, BC905F and BC910F manufactured by Henkel Japan Ltd., and Joncryl HPB-4110 manufactured by BASF are exemplified.

From the viewpoint of water resistance, the content of the aqueous resin in the water-resistant layer is preferably 50 mass% or more, more preferably 60 mass% or more, further more preferably 80 mass% or more, even more preferably 90 mass% or more, and particularly preferably 95 mass% or more, and 100 mass% or less, with respect to resin components of the water-resistant layer.

Here, the term "resin components of the water-resistant layer" means polymer components contained in the water-resistant layer, that is, compounds having a weight average molecular weight of 1,000 or more.

The water-resistant layer may contain, in addition to the aqueous resin described above, other components.

As the other components, for example, viscosity modifiers; defoaming agents; leveling agents such as surfactants and alcohol; colorants such as color pigments and color dyes; and anti-blocking agents such as inorganic pigments and synthetic resins are exemplified.

For these components, from the viewpoint of securing water resistance and heat-sealing properties, the total content of the other components in the solid content of the water-resistant layer is preferably 50 mass% or less, more preferably 30 mass% or less, and further more preferably 10 mass% or less. The lower limit value is 0 mass%.

The water-resistant layer is obtained by preparing a water-resistant layer coating solution containing an aqueous resin, followed by application of the water-resistant layer coating solution.

The water-resistant layer coating solution is preferably an aqueous dispersion. The water-resistant layer coating solution is more preferably a self-emulsifying and dispersing coating solution which does not contain an emulsifier or a dispersant such as a surfactant. When an emulsifier or a dispersant such as a surfactant is not contained, better water resistance is exhibited, which is preferable.

The ethylene-(meth)acrylic acid copolymer added to the water-resistant layer coating solution may be in the form of an ionomer. Here, the ionomer is a copolymer neutralized with cations. That is, synthetic resins in which an ethylene-methacrylic acid copolymer or an ethylene-acrylic acid copolymer is neutralized with cations all correspond to ionomers. The ionomers may be used alone, or used in combination of two or more thereof. As the cation, metal ions such as a sodium ion, a potassium ion, a calcium ion and a magnesium ion, an ammonium ion ($NH_4^+$), and organic ammonium ions are exemplified.

The method for applying the water-resistant layer coating solution is not particularly limited. From coating apparatuses that are commonly used, one may be appropriately selected and used. Examples thereof include various known coating apparatuses such as air knife coaters, blade coaters, gravure coaters, rod blade coaters, roll coaters, reverse roll coaters, bar coaters, curtain coaters, die slot coaters, Champllex coaters, metering blade type size press coaters, short dwell coaters, spray coaters, gate roll coaters and lip coaters.

For at least formation of the water-resistant layer on the surface (surface to be contacted with a liquid), an air knife coater is preferably used from the viewpoint of improving the quality of the water-resistant layer. For formation of the water-resistant layer on the back surface, an air knife coater is preferably used from the same viewpoint, but a gravure coater may be used.

The coating amount of the water-resistant layer 1 is 4.5 $g/m^2$ or more from the viewpoint of heat-sealing properties, water resistance and oil resistance. If the coating amount of the water-resistant layer 1 is less than 4.5 $g/m^2$, there is a tendency that sufficient heat-sealing properties, water resistance and oil resistance are not obtained, and as a result, ability to form a packaging container and water resistance may be limited. The coating amount of the water-resistant layer 1 is preferably 4.8 $g/m^2$ or more and 20 $g/m^2$ or less, more preferably 5.0 $g/m^2$ or more, further more preferably 5.5 $g/m^2$ or more, even more preferably 6.5 $g/m^2$ or more, still more preferably 7.0 $g/m^2$ or more, and still further more preferably 7.5 $g/m^2$ or more. The upper limit of the coating amount of the water-resistant layer 1 is more preferably 15 $g/m^2$ or less, further more preferably 14 $g/m^2$ or less, even more preferably 12 $g/m^2$ or less, and still more preferably 10 $g/m^2$ or less. The coating amount of the water-resistant layer 1 is preferably equal to or larger than the above-described lower limit value from the viewpoint of heat-sealing properties, water resistance and oil resistance, and preferably equal to or smaller than the above-described upper limit value from the viewpoint of moldability, cost and recyclability. The coating amount of the water-resistant layer 1 is, in the case where the water-resistant layer 1 has two or more layers, the total coating amount of the layers.

The coating amount of the water-resistant layer 2 is preferably 1.0 $g/m^2$ or more and 5.0 $g/m^2$ or less, more preferably less than 4.5 $g/m^2$, further more preferably 4.0 $g/m^2$ or less, and even more preferably 3.5 $g/m^2$ or less. The lower limit is more preferably 2.0 $g/m^2$ or more, and further more preferably 2.5 $g/m^2$ or more. The coating amount of the water-resistant layer 2 is preferably equal to or larger than the above-described lower limit value from the viewpoint of heat-sealing properties, and preferably equal to or smaller than the above-described upper limit value from the viewpoint of moldability and cost. The coating amount of the water-resistant layer 2 is, in the case where the water-resistant layer 2 has two or more layers, the total coating amount of the layers.

The coating amount of the water-resistant layer 2 is preferably 4 $g/m^2$ or more and 14 $g/m^2$ or less, and the upper limit is more preferably 12 $g/m^2$ or less, and further more preferably 10 $g/m^2$ or less. The coating amount of the water-resistant layer 2 is preferably equal to or larger than the above-described lower limit from the viewpoint of water resistance and heat-sealing properties, and preferably equal to or smaller than the above-described upper limit from the viewpoint of the recyclability of pulp forming the paper substrate. Setting the coating amount of the water-resistant layer 2 to 4 $g/m^2$ or more may suppress occurrence of unevenness in formation thickness on the entire surface of the water-resistant layer 2, leading to the obtainment of water-resistant paper having excellent water resistance.

When the water-resistant paper of the present embodiment comprises the water-resistant layer 2, the total coating amount of the water-resistant layer 1 and the water-resistant layer 2, that is, the total coating amount of the water-resistant layers on the surface and the back surface, is preferably 6 $g/m^2$ or more and 20 $g/m^2$ or less, more preferably 7 $g/m^2$ or more, and further more preferably 7.5 $g/m^2$ or more, and more preferably 15 $g/m^2$ or less, and further more preferably 12 $g/m^2$ or less. The total coating amount of the water-resistant layer 1 and the water-resistant layer 2 is preferably equal to or larger than the above-described lower limit from the viewpoint of water resistance and heat-sealing properties, and preferably equal to or smaller than the above-described upper limit from the viewpoint of the recyclability of pulp forming the paper substrate. By limiting the total coating amount of the water-resistant layer 1 and the water-resistant layer 2 to 20 $g/m^2$ or less to reduce the amount of resin, pulp is easily re-disintegrated, and excellent recyclability (pulp recovery ratio after re-disintegration) is exhibited.

When the water-resistant paper of the present embodiment comprises the water-resistant layer 2, the total coating amount of the water-resistant layer 1 and the water-resistant layer 2, that is, the total coating amount of the water-resistant layers on the surface and the back surface, is preferably 8 $g/m^2$ or more and 20 $g/m^2$ or less, and more preferably 9 $g/m^2$ or more, and more preferably 19 $g/m^2$ or less, further more preferably 17 $g/m^2$ or less, and even more preferably 15 $g/m^2$ or less from the viewpoint of the recyclability of pulp forming the paper substrate.

When the water-resistant paper of the present embodiment comprises the water-resistant layer 2 on the other surface of the paper substrate, the coating amount (A) of the water-resistant layer 2 may be equivalent to or smaller than the coating amount (B) of the water-resistant layer 1. Specifically, A/B may be 1.0 or less, 0.8 or less or 0.7 or less. The lower limit of A/B is not particularly limited, and is, for example, 0.3 or more. When the water-resistant layer 2 has two or more layers, the above A represents the total coating amount of the layers, and when the water-resistant layer 1 has two or more layers, the above B represents the total coating amount of the layers.

Therefore, when the water-resistant paper of the present embodiment is used for packaging containers (preferably food containers, for example, paper cups), and only one surface (surface to be contacted with a liquid) has the water-resistant layers, the total coating amount of the water-resistant layers on the surface to be contacted with a liquid side is preferably within the above-described range. When the water-resistant paper of the present embodiment is used for packaging containers (preferably food containers, for example, paper cups), and both surfaces (surface to be contacted with a liquid and print surface) have the water-resistant layers, the total coating amount of the water-resistant layers on the surface to be contacted with a liquid side and the total coating amount of the water-resistant layers on the print surface side are each preferably within the above-described range, and the total coating amount of the water-resistant layers on both the surfaces is preferably within the above-described range.

The water-resistant paper of the present embodiment may comprise, in addition to the above-described undercoat layer and the water-resistant layer, other layers. As the other layers, a print layer, a water vapor barrier layer, an oxygen barrier layer, an oxygen absorbing layer, a bondability imparting layer are exemplified. The print layer may be formed using known ink such as oil-based ink, water-based ink or biomass ink. The print layer may be formed all over a surface of the water-resistant paper, or formed on a part of the surface. That is, in the water-resistant paper of the present embodiment, printing may be applied to the whole or a part of at least one surface (for example, a print surface). The contents to be printed may be patterns, pictures and information (ingredients, an expiration date, QR code (registered trademark) and the like). When use for paper cups for hot drink is intended, the water-resistant layer 1 may be provided on one surface (surface to be contacted with a liquid) of the paper substrate, with the paper substrate exposed on the other surface (print surface, back surface) of the paper substrate, which may lead to insufficient heat-sealing properties (side-sealing properties) in formation of the barrel portion of the paper cup. To address this, a bondability imparting layer may be provided on the other surface (print surface, back surface) from the viewpoint of improving the heat-sealing properties (side-sealing properties). The bondability imparting layer can be formed using a known resin such as an olefin resin, a vinyl alcohol-based resin, an amide-based resin or an amine-based resin.

The water-resistant paper of the present embodiment preferably comprises, on at least one surface of the paper substrate, one or more (preferably only one) undercoat layers provided in a state of being in direct contact with the paper substrate and one or more (preferably only one) water-resistant layers provided in a state of being in direct contact with the undercoat layer, in the stated order, and more preferably comprises only the paper substrate, the undercoat layer and the water-resistant layer. While there is no limitation with regard to the other surface, for example, the water-resistant paper preferably comprises one or more (preferably only one) undercoat layers provided in a state of being in direct contact with the paper substrate and one or more (preferably only one) water-resistant layers provided in a state of being in direct contact with the undercoat layer, in the stated order when use for paper cups for cold drink is intended, and the water-resistant paper may comprise one or more (preferably only one) undercoat layers provided in a state of being in direct contact with the paper substrate when use for paper cups for hot drink is intended.

<Physical properties of water-resistant paper>

[Basis weight]

The basis weight of the water-resistant paper is not particularly limited, but is preferably 220 g/m$^2$ or more and 500 g/m$^2$ or less, more preferably 240 g/m$^2$ or more, and further more preferably 250 g/m$^2$ or more, and more preferably 450 g/m$^2$ or less, further more preferably 400 g/m$^2$ or less, even more preferably 350 g/m$^2$ or less, and still more preferably 300 g/m$^2$ or less when for example, use for packaging containers, preferably for food containers, and more preferably for paper cups is intended. The basis weight of the water-resistant paper is preferably equal to or larger than the above-described lower limit value from the viewpoint of obtaining water resistance, and a strength as a packaging container, and preferably equal to or smaller than the above-described upper limit value from the viewpoint of top curl processability, and the recyclability of pulp forming the paper substrate.

The basis weight of the water-resistant paper is measured according to JIS P 8124: 2011.

[Thickness]

The thickness (paper thickness) of the water-resistant paper is not particularly limited, but is preferably 230 $\mu$m or more and 500 $\mu$m or less, more preferably 250 $\mu$m or more, and further more preferably 270 $\mu$m or more, and more preferably 430 $\mu$m or less, further more preferably 400 $\mu$m or less, and even more preferably 350 $\mu$m or less when for example, use for packaging containers, preferably for food containers, and more preferably for paper cups is intended. The thickness of the water-resistant paper is preferably equal to or larger than the above-described lower limit from the viewpoint of obtaining water resistance, and a strength as a packaging container, and preferably equal to or smaller than the above-described upper limit from the viewpoint of top curl processability, and the recyclability of pulp forming the paper substrate.

The paper thickness of the water-resistant paper is measured according to JIS P 8118: 2014.

[Density]

The density of the water-resistant paper is not particularly limited, but is preferably 0.4 g/cm$^3$ or more and 1.1 g/cm$^3$ or less, more preferably 0.6 g/cm$^3$ or more, and further more preferably 0.7 g/cm$^3$ or more, and more preferably 1.0 g/cm$^3$ or less, and further more preferably 0.95 g/cm$^3$ or less when for example, use for packaging containers, preferably for paper cups is intended. The density of the water-resistant paper is preferably equal to or larger than the above-described lower limit value from the viewpoint of obtaining a paper strength as a packaging container, and preferably equal to or smaller than the above-described upper limit value from the viewpoint of flexibility in molding. The density of the water-resistant paper is calculated from the basis weight and the thickness of the water-resistant paper which are obtained by the measurement methods described above.

[Cobb water absorptiveness]

In the water-resistant paper of the present embodiment, the Cobb water absorptiveness for water at 20°C in a contact time of 30 minutes is preferably 15 g/m$^2$ or less, more preferably 14 g/m$^2$ or less, further more preferably 10 g/m$^2$ or less, even more preferably 8 g/m$^2$ or less, still more preferably 6 g/m$^2$ or less, still further more preferably 4 g/m$^2$ or less, and particularly preferably 3 g/m$^2$ or less or 2 g/m$^2$ or less (the lower limit is 0 g/m$^2$), on the surface having the water-resistant layer 1, from the viewpoint of water resistance against cold water. The Cobb water absorptiveness at 20°C can be adjusted to be within a desired range by, for example, the average Runkel ratio of pulp forming the paper substrate, the type and the coating amount of resin used for the water-resistant layer, the types of the pigment and latex used for the undercoat layer, the blending amounts thereof, and the coating amount of the undercoat layer. For the Cobb water absorptiveness, a value determined according to JIS P 8140: 1998 is adopted.

In the water-resistant paper of the present embodiment, the Cobb water absorptiveness for water at 90°C in a contact time of 30 minutes is preferably 20 g/m$^2$ or less, more preferably 18 g/m$^2$ or less, further more preferably 16 g/m$^2$ or less, even more preferably 15 g/m$^2$ or less, still more preferably 14 g/m$^2$ or less, still further more preferably 12 g/m$^2$ or less, even further more preferably 10 g/m$^2$ or less, and particularly preferably 8 g/m$^2$ or less, 5 g/m$^2$ or less or 3 g/m$^2$ or less (the lower limit is 0 g/m$^2$), on the surface having the water-resistant layer 1, from the viewpoint of water resistance against hot water. The Cobb water absorptiveness at 90°C can be adjusted to be within a desired range by, for example, the average Runkel ratio of pulp forming the paper substrate, the type and the coating amount of resin used for the water-resistant layer, the types of the pigment and latex used for the undercoat layer, the blending amounts thereof, and the coating amount of the undercoat layer. For the Cobb water absorptiveness, a value determined according to JIS P 8140: 1998 is adopted.

In the water-resistant paper of the present embodiment, the Cobb water absorptiveness for water at 20°C in a contact time of 30 minutes is preferably 11 g/m$^2$ or less, more preferably 9 g/m$^2$ or less, further more preferably 7 g/m$^2$ or less, even more preferably 5 g/m$^2$ or less, and still more preferably 3 g/m$^2$ or less (the lower limit is 0 g/m$^2$ or less), on the surface having the water-resistant layer 2 (for example, print surface, back surface), from the viewpoint of water resistance against cold water. The Cobb water absorptiveness at 20°C can be adjusted to be within a desired range by, for example, the type of resin used for the water-resistant layer 2, the coating amount of the water-resistant layer 2, the types of the pigment and latex used for the undercoat layer 2, the blending amounts thereof, and the coating amount of the undercoat layer 2. For the Cobb water absorptiveness, a value determined according to JIS P 8140: 1998 is adopted.

[Oken smoothness]

From the viewpoint of water resistance, the Oken smoothness of the water-resistant paper of the present embodiment is preferably 32 seconds or more, more preferably 35 seconds or more, and further more preferably 38 seconds or more, on the surface having the water-resistant layer 1. The upper limit of the Oken smoothness is not particularly limited, and is, for example, 300 seconds or less from the viewpoint of ease of production.

From the viewpoint of water resistance, the Oken smoothness of the water-resistant paper of the present embodiment is preferably 88 seconds or more, more preferably 91 seconds or more, and further more preferably 94 seconds or more, on the surface having the water-resistant layer 2. The upper limit of the Oken smoothness is not particularly limited, and is, for example, 500 seconds or less from the viewpoint of ease of production.

The Oken smoothness of the surface having the water-resistant layer 1 and the surface having the water-resistant layer 2 in the water-resistant paper can be adjusted by, for example, the average Runkel ratio of pulp forming the paper substrate, the type of resin used for the water-resistant layer 1 and the water-resistant layer 2, the coating amounts of the water-resistant layer 1 and the water-resistant layer 2, the types of the pigment and latex used for the undercoat layer 1 and the undercoat layer 2, the blending amounts thereof, and the coating amounts of the undercoat layer 1 and the undercoat layer 2. For the Oken smoothness of the water-resistant paper, a value determined according to JIS P 8155: 2010 is adopted.

[Oil resistance]

The Kit value of the water-resistant paper of the present embodiment is preferably 3 or more, more preferably 5 or more, and further more preferably 8 or more, on the surface having the water-resistant layer 1, as measured according to JAPAN TAPPI No. 41 (Kit method). The larger the Kit value (closer to the upper limit "12"), the better the oil resistance. When the Kit value is within the above-described range, the water-resistant paper can be suitably used for food packages.

<Uses of water-resistant paper>

The water-resistant paper of the present embodiment has excellent heat-sealing properties and water resistance, and thus can be suitably used for packaging containers such as cups, dishes, trays, lid materials, pouches and tube-shaped containers; cutleries such as spoons, forks, knives and chopsticks; straws; soft packaging materials such as packaging paper, packaging bags, lids and labels. Packaging containers can be formed by, for example, applying printing to a surface of water-resistant paper if necessary, cutting the water-resistant paper into a shape matching a shape of a packaging container to be produced, performing bending, and bonding overlap portions by heat-sealing. Therefore, according to the present invention, packaging containers (in particular, paper cups) obtained using the above water-resistant paper are also provided. The water-resistant paper of the present embodiment also has excellent oil resistance, and thus can also be suitably used for food packages.

The water-resistant paper of the present embodiment has excellent top curl properties, and thus is suitable for, among the items listed above, packaging containers for which top curl is required, such as paper cups, paper dishes and paper trays. The contents of the packaging container may be food or non-food. The contents of the packaging container may be liquid, solid or gel. The contents of the packaging container are not particularly limited, and examples thereof include taste drinks such as coffee, Japanese tea, tea, juice and carbonated drink; alcohol drinks such as rice wine, distilled spirit and wine; milk beverages such as cow milk; foods such as table-ready food (instant noodles and the like), microwavable food, taste food (yogurt, ice cream, jelly, pudding and the like) and prepared food; medical drugs; and chemical products such as car wax, shampoos, hair conditioners, detergent, bath salts, hair colors and toothpaste.

The amount of plastic used for packaging containers made from the water-resistant paper of the present embodiment is smaller than that for packaging containers made from conventional laminated paper. Furthermore, packaging containers made from conventional laminated paper are required to be disintegrated using a pulper having high disintegration performance in recycling for use as wastepaper, whereas packaging containers made from the water-resistant paper of the present embodiment can be disintegrated with a pulper having ordinary disintegration performance, and have excellent recyclability. Packaging containers made from the water-resistant paper of the present embodiment are subjected to washing, cutting, disintegration and the like to prepare a pulp slurry, and the obtained pulp slurry can be used to produce paper. The type of paper manufactured is not particularly limited, and examples thereof include print paper, packaging paper, sanitary paper, and paperboard. It is also possible to produce packaging containers (for example, tissue paper boxes, sleeves for paper cups) by processing the manufactured paper.

Examples

The feature of the present invention will be described in further detail by giving Examples and Comparative Examples below. The materials, use amounts, proportions, treatment details, treatment procedures and the like shown in Examples below can be appropriately changed without departing from the spirit of the present invention. Therefore, the scope of the present invention should not be construed as being limited by the specific examples shown below. In Examples and Comparative Examples, operations were performed under conditions of room temperature (20 to 25°C) and normal humidity (40 to 50% RH) unless otherwise specified.

The raw materials used in Examples and Comparative Examples are as follows.

<Raw material pulp>

- LBKP (I): bleached hardwood kraft pulp (LBKP) made from eucalyptus and acacia. Runkel ratio: 0.29. Detailed blending ratios are as follows. Eucalyptuses A and B are different in tree species and production region.

    Eucalyptus A: Runkel ratio of 0.24, added at 15 mass%
    Eucalyptus B: Runkel ratio of 0.31, added at 75 mass%
    Acacia A: Runkel ratio of 0.25, added at 10 mass%

- LBKP (II): bleached hardwood kraft pulp (LBKP) made from acacia. Runkel ratio: 0.60. Detailed blending ratios are as follows. Acacias A, B and C are different in tree species and production region.

    Acacia B: Runkel ratio of 0.60, added at 50 mass%
    Acacia C: Runkel ratio of 0.60, added at 50 mass%

- NBKP: bleached softwood kraft pulp made from Radiata Pine and Douglas fir. Runkel ratio: 0.85. Detailed blending ratios are as follows.

    Radiata Pine: Runkel ratio of 0.80, added at 40 mass%
    Douglas fir: Runkel ratio of 0.88, added at 60 mass%

<Pigments>

- Heavy calcium carbonate (brand name "FMT-90", FIMATEC LTD., average particle size: 1.1 $\mu$m, aspect ratio: 1.0 to 3.0)
- Kaolin (brand name "BARRISURF HX", manufactured by Imerys S.A., average particle size: 9.0 $\mu$m, aspect ratio: 80 to 100).

<Latex>

- Latex: Styrene-acryl-based copolymer latex (brand name "Acronal S728ap", manufactured by BASF, glass transition temperature: 23°C), used as coating solutions A, B and AA.

<Aqueous resin dispersion>

- Brand name "AQUENCE EPIX BC9220HS", manufactured by Henkel Japan Ltd., solid content: 23 mass%, polyolefin-based resin dispersion.
- Brand name "AQUENCE EPIX BC905F", manufactured by Henkel Japan Ltd., solid content: 45 mass%, acryl-based resin dispersion.
- Brand name "CHEMIPEARL S300", manufactured by Mitsui Chemicals, Inc. solid content: 35 mass%, ethylene-methacrylic acid copolymer dispersion.
- Brand name "RHOBARR 320", manufactured by Dow Inc., solid content: 43 mass%, polyolefin-based resin dispersion.
- Brand name "RHOBARR 325", manufactured by Dow Inc., solid content: 47 mass%, polyolefin-based resin dispersion.
- Brand name "201103PX. S", manufactured by Michelman Japan Limited, solid content: 20 mass%, ethylene-acrylic acid copolymer dispersion.
- Brand name "Joncryl HPB-4110", manufactured by BASF, solid content: 40 mass%, acryl-based resin dispersion

<Others>

- Defoaming agent: Brand name "BISMER KS-38E", manufactured by Nisshin Kagaku Kenkyusho Co., Ltd.

<Preparation of undercoat layer coating solution>

(a) Preparation of coating solution A

A pigment dispersion was obtained in which the pigment formulation was adjusted so that the content of heavy calcium carbonate in the solid content was 70.0 mass% and the content of kaolin in the solid content was 30.0 mass%. To the pigment dispersion, styrene-acryl-based copolymer latex was added to prepare a pigment/styrene-acryl-based copolymer latex mixed solution in which the content of the pigment in the solid content was 85.0 mass% and the content of styrene-acryl-based copolymer latex was 15.0 mass%. To the pigment/styrene-acryl-based copolymer latex mixed solution, a defoaming agent was added to prepare a coating solution A which had a solid content of 60 mass% and in which the content of the pigment/styrene-acryl-based copolymer latex mixture in the solid content was 99.5 mass% and the content of the defoaming agent was 0.5 mass%.

(b) Preparation of coating solution B

A pigment dispersion was obtained in which the pigment formulation was adjusted so that the content of heavy calcium carbonate in the solid content was 70.0 mass% and the content of kaolin in the solid content was 30.0 mass%. To the pigment dispersion, styrene-acryl-based copolymer latex was added to prepare a pigment/styrene-acryl-based copolymer latex mixed solution in which the content of the pigment in the solid content was 70.0 mass% and the content of styrene-acryl-based copolymer latex was 30.0 mass%. To the pigment/styrene-acryl-based copolymer latex mixed solution, a defoaming agent was added to prepare a coating solution B which had a solid content of 60 mass% and in which the content of the pigment/styrene-acryl-based copolymer latex mixture in the solid content was 99.5 mass% and the content of the defoaming agent was 0.5 mass%.

(c) Preparation of coating solution AA

A pigment dispersion having a solid content of 70 mass% was prepared using 70 parts by mass of heavy calcium carbonate and 30 parts by mass of kaolin as pigments. To the pigment dispersion, 15 parts by mass of styrene-acryl-based copolymer latex was added to prepare a coating solution AA having a solid content of 62 mass%.

<Preparation of water-resistant layer coating solution>

(a) Preparation of coating solution C (coating solution for gravure coater)

To an aqueous resin dispersion (AQUENCE EPIX BC 9220HS, manufactured by Henkel Japan Ltd.), a defoaming agent was added. Water was added thereto to adjust the solid content, thereby preparing a coating solution C which had a solid content of 21 mass% and in which the content of the aqueous resin in the solid content was 99.5 mass% and the content of the defoaming agent was 0.5 mass%.

(b) Preparation of coating solution D (coating solution for air knife coater)

To an aqueous resin dispersion (AQUENCE EPIX BC 9220HS, manufactured by Henkel Japan Ltd.), a defoaming agent was added. Water was added thereto to adjust the solid content, thereby preparing a coating solution D which had a solid content of 18 mass% and in which the content of the aqueous resin in the solid content was 99.5 mass% and the content of the defoaming agent was 0.5 mass%.

(c) Preparation of coating solution E (coating solution for gravure coater)

To an aqueous resin dispersion (AQUENCE EPIX BC905F, manufactured by Henkel Japan Ltd.), a defoaming agent was added. Water was added thereto to adjust the solid content, thereby preparing a coating solution E which had a solid content of 35 mass% and in which the content of the aqueous resin in the solid content was 99.5 mass% and the content of the defoaming agent was 0.5 mass%.

(d) Preparation of coating solution F (coating solution for air knife coater)

To an aqueous resin dispersion (AQUENCE EPIX BC905F, manufactured by Henkel Japan Ltd.), a defoaming agent was added. Water was added thereto to adjust the solid content, thereby preparing a coating solution F which had a solid content of 30 mass% and in which the content of the aqueous resin in the solid content was 99.5 mass% and the content of the defoaming agent was 0.5 mass%.

(e) Preparation of coating solution G (coating solution for gravure coater)

To an aqueous resin dispersion (CHEMIPEARL S300, manufactured by Mitsui Chemicals, Inc.), a defoaming agent was added. Water was added thereto to adjust the solid content, thereby preparing a coating solution G which had a solid content of 28 mass% and in which the content of the aqueous resin in the solid content was 99.5 mass% and the content of the defoaming agent was 0.5 mass%.

(f) Preparation of coating solution H (coating solution for air knife coater)

To an aqueous resin dispersion (CHEMIPEARL S300, manufactured by Mitsui Chemicals, Inc.), a defoaming agent was added. Water was added thereto to adjust the solid content, thereby preparing a coating solution H which had a solid content of 25 mass% and in which the content of the aqueous resin in the solid content was 99.5 mass% and the content of the defoaming agent was 0.5 mass%.

(g) Preparation of coating solution I (coating solution for gravure coater)

To an aqueous resin dispersion (RHOBARR320 manufactured by Dow Inc.), a defoaming agent was added. Water was added thereto to adjust the solid content, thereby preparing a coating solution I which had a solid content of 28 mass% and in which the content of the aqueous resin in the solid content was 99.5 mass% and the content of the defoaming agent was 0.5 mass%.

(h) Preparation of coating solution J (coating solution for gravure coater)

To an aqueous resin dispersion (RHOBARR320 manufactured by Dow Inc.), a defoaming agent was added. Water was added thereto to adjust the solid content, thereby preparing a coating solution J which had a solid content of 27 mass% and in which the content of the aqueous resin in the solid content was 99.5 mass% and the content of the defoaming agent was 0.5 mass%.

(i) Preparation of coating solution K (coating solution for gravure coater)

To an aqueous resin dispersion (201103PX. S, manufactured by Michelman Japan Limited.), a defoaming agent was added. Water was added thereto to adjust the solid content, thereby preparing a coating solution K which had a solid content of 17 mass% and in which the content of the aqueous resin in the solid content was 99.5 mass% and the content of the defoaming agent was 0.5 mass%.

(j) Preparation of coating solution L (coating solution for air knife coater)

To an aqueous resin dispersion (201103PX. S, manufactured by Michelman Japan Limited.), a defoaming agent was added. Water was added thereto to adjust the solid content, thereby preparing a coating solution L which had a solid content of 16 mass% and in which the content of the aqueous resin in the solid content was 99.5 mass% and the content of the defoaming agent was 0.5 mass%.

(k) Preparation of coating solution M (coating solution for gravure coater)

To an aqueous resin dispersion (Joncryl HPB-4110, manufactured by BASF), a defoaming agent was added. Water was added thereto to adjust the solid content, thereby preparing a coating solution M which had a solid content of 34 mass% and in which the content of the aqueous resin in the solid content was 99.5 mass% and the content of the defoaming agent was 0.5 mass%.

(L) Preparation of coating solution N (coating solution for air knife coater)

To an aqueous resin dispersion (Joncryl HPB-4110, manufactured by BASF), a defoaming agent was added. Water was added thereto to adjust the solid content, thereby preparing a coating solution N which had a solid content of 31 mass% and in which the content of the aqueous resin in the solid content was 99.5 mass% and the content of the defoaming agent was 0.5 mass%.

(m) Preparation of coating solution O (coating solution for gravure coater)

To an aqueous resin dispersion (AQUENCE EPIX BC 9220HS, manufactured by Henkel Japan Ltd.), a defoaming agent was added. Water was added thereto to adjust the solid content, thereby preparing a coating solution O which had a solid content of 19 mass% and in which the content of the aqueous resin in the solid content was 99.5 mass% and the content of the defoaming agent was 0.5 mass%.

(n) Preparation of coating solution P (coating solution for gravure coater)

To an aqueous resin dispersion (RHOBARR325 manufactured by Dow Inc.), a defoaming agent was added. Water was added thereto to adjust the solid content, thereby preparing a coating solution P which had a solid content of 38 mass% and in which the content of the aqueous resin in the solid content was 99.5 mass% and the content of the defoaming agent was 0.5 mass%.

(o) Preparation of coating solution Q (coating solution for air knife coater)

To an aqueous resin dispersion (RHOBARR325 manufactured by Dow Inc.), a defoaming agent was added. Water was added thereto to adjust the solid content, thereby preparing a coating solution Q which had a solid content of 35 mass% and in which the content of the aqueous resin in the solid content was 99.5 mass% and the content of the defoaming agent was 0.5 mass%.

<Example 1-1>

To 100 parts by mass (in terms of solid content) of a pulp slurry obtained by mixing beaten LBKP (I) (CSF: 400 mL, Runkel ratio: 0.29) and beaten NBKP (CSF: 500 mL, Runkel ratio: 0.85) at a ratio of 90 mass% : 10 mass%, 0.85 parts by mass of a weakly acidic rosin-based sizing agent (manufactured by ARAKAWA CHEMICAL INDUSTRIES, LTD., Sizepine N-811), 0.15 parts by mass of a wet paper strengthening agent (polyamide polyamine epichlorohydrin resin (PAE), manufactured by Seiko PMC Corporation, WS4020), 0.7 parts by mass of a dry paper strengthening agent (cationized starch, manufactured by Oji Cornstarch Co., Ltd., Ace k), and 1.5 parts by mass of aluminum sulfate were added to prepare paper stock for a first layer and a fifth layer. In addition, paper stock for a second layer and a fourth layer and paper stock for a third layer were similarly prepared except that the beating degree of LBKP (I) and NBKP were changed, so that the pulp had CSF described later, and the pulp formulation of each layer was changed as shown in Table 1. A Fourdrinier machine for making five-layered paper was applied to these paper stocks to make paper, thereby obtaining a paper substrate.
To both surfaces of the paper substrate, the above coating solution A was applied so as to provide a coating amount (solid content) of 5.0 g/m$^2$ per one surface using a rod coater, and dried to form an undercoat layer, thereby obtaining undercoat paper having a basis weight of 260 g/m$^2$ and a paper thickness of 305 $\mu$m.
To a high-smoothness surface of the undercoat paper, the coating solution D was applied so as to provide a coating amount (solid content) of 5.0 g/m$^2$ using an air knife coater, and dried to form a water-resistant layer 1. Thereafter, to the opposite surface, the coating solution C was applied so as to provide a coating amount (solid content) of 3.0 g/m$^2$ using a gravure coater, and dried to form a water-resistant layer 2, thereby preparing water-resistant paper. The high-smoothness surface (felt surface) of the paper substrate corresponds to the high-smoothness surface of the undercoat paper, and corresponds to a surface (surface to be contacted with a liquid) of the water-resistant paper.

<Example 1-2>

A water-resistant paper was prepared in the same manner as in Example 1-1 except that the pulp formulation of each layer was changed as shown in Table 1, and the pulp formulation in all layers was set to LBKP (I): 89 mass% and NBKP: 11 mass%.

<Example 1-3>

A water-resistant paper was prepared in the same manner as in Example 1-1 except that the pulp formulation of each layer was changed as shown in Table 1, and the pulp formulation in all layers was set to LBKP (I): 66 mass% and NBKP: 34 mass%.

<Example 1-4>

Using paper stock prepared in the same manner as in Example 1-1, paper was made with a Fourdrinier machine for making five-layered paper to obtain a paper substrate.
To both surfaces of the paper substrate, the coating solution A was applied so as to provide a coating amount (solid content) of 10.0 g/m$^2$ using a rod coater, and dried to form an undercoat layer, thereby obtaining undercoat paper having a basis weight of 270 g/m$^2$ and a paper thickness of 310 $\mu$m.
To a high-smoothness surface (surface, surface to be contacted with a liquid) of the undercoat paper, the coating solution D was applied so as to provide a coating amount (solid content) of 5.0 g/m$^2$ using an air knife coater, and dried to form a water-resistant layer 1. Thereafter, to the opposite surface, the coating solution C was applied so as to provide a coating amount (solid content) of 3.0 g/m$^2$ using a gravure coater, and dried to form a water-resistant layer 2, thereby preparing water-resistant paper.

<Example 1-5>

A water-resistant paper was prepared in the same manner as in Example 1-1 except that the coating amount of the water-resistant layer on the surface was increased to 6 g/m$^2$.

<Example 1-6>

A water-resistant paper was prepared in the same manner as in Example 1-1 except that the coating amount of the water-resistant layer on the surface was increased to 8 g/m$^2$.

<Example 1-7>

A water-resistant paper was prepared in the same manner as in Example 1-1 except that the undercoat layer coating solution was changed from the coating solution A to the coating solution B.

<Example 1-8>

A water-resistant paper was prepared in the same manner as in Example 1-6 except that the water-resistant layer coating solution for the surface was changed from the coating solution D to the coating solution F, and the water-resistant layer coating solution for the back surface was changed from the coating solution C to the coating solution E.

<Example 1-9>

A water-resistant paper was prepared in the same manner as in Example 1-6 except that the water-resistant layer coating solution for the surface was changed from the coating solution D to the coating solution H, and the water-resistant layer coating solution for the back surface was changed from the coating solution C to the coating solution G.

<Example 1-10>

A water-resistant paper was prepared in the same manner as in Example 1-6 except that the water-resistant layer coating solution for the surface was changed from the coating solution D to the coating solution J, and the water-resistant layer coating solution for the back surface was changed from the coating solution C to the coating solution I.

<Example 1-11>

A water-resistant paper was prepared in the same manner as in Example 1-6 except that the water-resistant layer coating solution for the surface was changed from the coating solution D to the coating solution L, and the water-resistant layer coating solution for the back surface was changed from the coating solution C to the coating solution K.

<Example 1-12>

A water-resistant paper was prepared in the same manner as in Example 1-6 except that the water-resistant layer coating solution for the surface was changed from the coating solution D to the coating solution N, and the water-resistant layer coating solution for the back surface was changed from the coating solution C to the coating solution M.

<Example 1-13>

A water-resistant paper was prepared in the same manner as in Example 1-1 except that the water-resistant layer 2 was not formed.

<Example 1-14>

A water-resistant paper was prepared in the same manner as in Example 1-1 except that the coating amount of the undercoat layer on the surface was changed to 10.0 g/m$^2$.

<Example 1-15>

A water-resistant paper was prepared in the same manner as in Example 1-1 except that the coating amount of the undercoat layer on the back surface was changed to 20.0 g/m$^2$.

<Example 1-16>

A water-resistant paper was prepared in the same manner as in Example 1-1 except that the water-resistant layer coating solution for the surface was changed from the coating solution D to the coating solution Q, the coating amount of the water-resistant layer on the surface was changed to 9.0 g/m$^2$, the water-resistant layer coating solution for the back surface was changed from the coating solution C to the coating solution P, and the coating amount of the water-resistant layer on the back surface was changed to 3.0 g/m$^2$.

<Comparative Example 1-1>

A water-resistant paper was prepared in the same manner as in Example 1-1 except that LBKP (I) was changed to LBKP (II).

<Comparative Example 1-2>

A water-resistant paper was prepared in the same manner as in Example 1-1 except that the proportions of beaten LBKP (I) and beaten NBKP in each layer were changed to 45 mass% and 55 mass%, respectively.

<Comparative Example 1-3>

A water-resistant paper was prepared in the same manner as in Example 1-1 except that the amount of resin on the surface of the water-resistant layer was changed to 4 g/m$^2$.

<Example 2-1>

To 100 parts by mass (in terms of solid content) of a pulp slurry obtained by mixing beaten LBKP (I) (CSF: 450 mL) and beaten NBKP (CSF: 500 mL) at a ratio of 80 mass% : 20 mass%, 0.85 parts by mass of a weakly acidic rosin-based sizing agent (manufactured by ARAKAWA CHEMICAL INDUSTRIES, LTD., Sizepine N-811), 0.15 parts by mass of a wet paper strengthening agent (polyamide polyamine epichlorohydrin resin (PAE), manufactured by Seiko PMC Corporation, WS4020), and 0.7 parts by mass of a dry paper strengthening agent (cationized starch, manufactured by Oji Cornstarch Co., Ltd., Ace k) were added to prepare paper stock for outer layers (first layer and fifth layer).

Similarly, to 100 parts by mass (in terms of solid content) of a pulp slurry obtained by mixing beaten LBKP (I) (CSF: 500 mL) and beaten NBKP (CSF: 500 mL) at a ratio of 80 mass% : 20 mass%, 0.85 parts by mass of a weakly acidic rosin-based sizing agent (manufactured by ARAKAWA CHEMICAL INDUSTRIES, LTD., Sizepine N-811), 0.15 parts by mass of a wet paper strengthening agent (polyamide polyamine epichlorohydrin resin (PAE), manufactured by Seiko PMC Corporation, WS4020), and 0.7 parts by mass of a dry paper strengthening agent (cationized starch, manufactured by Oji Cornstarch Co., Ltd., Ace k) were added to prepare paper stock for middle layers (second to fourth layers).

A Fourdrinier machine for making five-layered paper was applied to these paper stocks to make paper in which the areal weights of the first to fifth layers were 40 g/m$^2$, 40 g/m$^2$, 90 g/m$^2$, 40 g/m$^2$ and 40 g/m$^2$, respectively, thereby obtaining a paper substrate. The low-smoothness surface (wire surface) of the paper substrate was a surface, and the high-smoothness surface (felt surface) of the paper substrate was a back surface.

Subsequently, to a surface (surface to be contacted with a liquid) of the paper substrate, the coating solution AA was applied so as to provide a coating amount (solid content) of 10.0 g/m$^2$ with a rod blade coater, and dried to form an undercoat layer 1.

Similarly, to the back surface (print surface), the coating solution AA was applied so as to provide a coating amount (solid content) of 10.0 g/m$^2$, and dried to form an undercoat layer 2.

To a surface of the thus obtained paper substrate on the undercoat layer 1 side, the coating solution O was applied so as to provide a coating amount (solid content) of 8.0 g/m$^2$ with an air knife coater, and dried to form a water-resistant layer 1. Subsequently, to a surface on the undercoat layer 2 side, the coating solution O was applied so as to provide a coating amount (solid content) of 5.0 g/m$^2$ with an air knife coater, and dried to form a water-resistant layer 2, thereby preparing water-resistant paper.

<Example 2-2>

A water-resistant paper was prepared in the same manner as in Example 2-1 except that a pulp slurry obtained by mixing LBKP (I) and NBKP at a ratio of 66 mass% : 34 mass% was used.

<Example 2-3>

A water-resistant paper was prepared in the same manner as in Example 2-1 except that the coating amount (solid content) of the water-resistant layer 1 was changed to 5.0 $g/m^2$.

<Example 2-4>

A water-resistant paper was prepared in the same manner as in Example 2-1 except that the coating amounts (solid content) of the undercoat layer 1 and the undercoat layer 2 were changed to 5.0 $g/m^2$ and 5.0 $g/m^2$, respectively.

<Example 2-5>

A water-resistant paper was prepared in the same manner as in Example 2-1 except that the coating amounts (solid content) of the undercoat layer 1 and the undercoat layer 2 were changed to 13.0 $g/m^2$ and 13.0 $g/m^2$, respectively.

<Example 2-6>

A water-resistant paper was prepared in the same manner as in Example 2-1 except that the coating amount (solid content) of the undercoat layer 2 was changed to 3.0 $g/m^2$.

<Comparative Example 2-1>

A water-resistant paper was prepared in the same manner as in Example 2-1 except that a pulp slurry obtained by mixing LBKP (II) and NBKP at a ratio of 80 mass% : 20 mass% was used.

<Comparative Example 2-2>

A water-resistant paper was prepared in the same manner as in Example 2-1 except that a pulp slurry obtained by mixing LBKP (I) and NBKP at a ratio of 55 mass% : 45 mass% was used.

<Comparative Example 2-3>

A water-resistant paper was prepared in the same manner as in Example 2-1 except that the undercoat layer 1 and the undercoat layer 2 were not formed.

<Comparative Example 2-4>

To 100 parts by mass (in terms of solid content) of a pulp slurry obtained by mixing beaten LBKP (I) (CSF: 450 mL) and beaten NBKP (CSF: 550 mL) at a ratio of 80 mass% : 20 mass%, 0.85 parts by mass of a weakly acidic rosin-based sizing agent (manufactured by ARAKAWA CHEMICAL INDUSTRIES, LTD., Sizepine N-811), 0.15 parts by mass of a wet paper strengthening agent (polyamide polyamine epichlorohydrin resin (PAE), manufactured by Seiko PMC Corporation, WS4020), and 0.7 parts by mass of a dry paper strengthening agent (cationized starch, manufactured by Oji Cornstarch Co., Ltd., Ace k) were added to prepare paper stock for outer layers (first layer and fifth layer).
Paper stock for middle layers (second to fourth layers) was prepared in the same manner as in Example 2-1. Using these paper stocks, the same procedure as in Example 2-1 was carried out to obtain a paper substrate.
To a surface (surface to be contacted with a liquid) of the obtained paper substrate, LDPE (low-density polyethylene) was laminated at 22 $g/m^2$. Subsequently, LDPE (low-density polyethylene) was laminated at 17 $g/m^2$ to the back surface (print surface) to prepare water-resistant paper (laminated paper). The lamination was performed at a melting temperature of 310°C by a melt extrusion lamination method.

[Measurement and evaluation]

Measurement and evaluation were performed on the paper substrates, the undercoat paper, and the water-resistant papers of Examples 1-1 to 1-16, 2-1 to 2-6 and Comparative Examples 1-1 to 1-3 and 2-1 to 2-4 as follows.

<Runkel ratio>

The fiber width, the fiber coarseness and the lumen diameter of pulp were measured using a fiber length measuring apparatus (manufactured by Valmet Corporation, Valmet Fiber Image Analyzer Valmet FS5).
The Runkel ratio of each of the pulp was calculated by the following expression.

$$\text{Runkel ratio} = \text{fiber wall thickness} \times 2/\text{lumen diameter}$$

The fiber wall thickness was calculated by the following expression (circle approximation).

[Expression 1]

$$W_a = \frac{W_i - \sqrt{W_i^2 - 4\,C \times 1000/(d\pi)}}{2}$$

In the above expression, Wa represents a fiber wall thickness ($\mu$m), Wi represents a fiber width ($\mu$m), C represents a fiber coarseness (mg/m), and d represents a density (kg/dm$^3$).
The density d was calculated by the following expression using a water retention value WRV of pulp measured according to JIS P 8228: 2018.

[Expression 2]

$$d = 1.4223 \times \frac{1}{0.625 + WRV} - 0.0842$$

The average Runkel ratio of pulp forming the paper substrate was calculated from the Runkel ratio and the pulp formulation of each of the pulp (LBKP (I), LBKP (II) and NBKP). When the Runkel ratio is measured from the water-resistant paper, the average Runkel ratio forming the paper substrate can be calculated by disintegrating the water-resistant paper according to JIS P 8220-1: 2012, and performing the above measurement on the obtained pulp.

<CSF of pulp raw material forming paper substrate>

CSF of the raw material pulp of the paper substrate was measured according to JIS P 8121-2: 2012 "Pulps-Determination of drainability-Part 2: "Canadian Standard" freeness method".

<Basis weight>

The basis weight was measured according to JIS P 8124: 2011.

<Paper thickness>

The paper thickness was measured according to JIS P 8118: 2014.

<Density>

The density was calculated from the basis weight and the paper thickness obtained by the measurement methods described above.

<Cobb water absorptiveness>

The Cobb water absorptiveness, on the surface having the water-resistant layer 1, was measured under conditions of a temperature of 20°C or 90°C in a contact time of 30 minutes according to JIS P 8140: 1998. For Examples 2-1 to 2-6 and Comparative Examples 2-1 to 2-4, the Cobb water absorptiveness for ion-exchange water at 20°C in a contact time of 30 minutes, on the surface having the water-resistant layer 2, was calculated in the same manner as in the case of the surface having the water-resistant layer 1.

The lower the value is, the higher the water resistance is.

<Oil resistance degree (Kit value)>

The oil resistance degree on the surface having the water-resistant layer 1 was evaluated according to JAPAN TAPPI NO. 41 (Kit method). The larger the value (Kit value) (closer to the upper limit "12") is, the higher the oil resistance (oil repellency) is.

<Smoothness (Oken smoothness)>

The smoothness was measured according to JIS P 8155: 2010.

<Heat-sealing properties>

The obtained water-resistant paper was cut to 15 cm in the longitudinal direction and 25 cm in the lateral direction, and rolled in the lateral direction into a cylindrical shape with a diameter of 7.5 cm such that the surface (surface to be contacted with a liquid) was on the inner side, and the heat-sealing properties of a portion where the water-resistant papers overlapped each other (which corresponds to a side portion of a paper cup barrel portion, side seal width: 0.7 cm) were evaluated on the basis of the following criteria. The heat-sealing was performed under conditions of a temperature of 250°C, a pressure of 0.1 MPa and a bonding time of 2 seconds using "CS-205" manufactured by Chubu Sogyo Co., Ltd.

Samples given any of "A" to "C" can be determined to be acceptable for practical use.

[Evaluation criteria]

A: The bonding strength was high, peeling did not easily occur even when the shape was distorted by pressing with the hand from the outside of the cylinder, and when bonded portions were torn for breaking up, it could be confirmed that all of the bonded portions were broken apart from the substrate.

B: The bonding strength was high, and peeling did not easily occur even when the shape was distorted by pressing with the hand from the outside of the cylinder, but when bonded portions were torn for breaking up, there were a few portions which were not broken apart from the substrate.

C: The bonding strength was moderately high, and peeling did not easily occur even when the shape was distorted by pressing with the hand from the outside of the cylinder, but when bonded portions were torn for breaking up, the bonded state was bad and some of the portions were not broken from the substrate.

D: The bonding strength was a little low, and half or more of bonded portions was peeled off when the shape was distorted by pressing with the hand from the outside of the cylinder.

E: Not bonded at all.

<Recyclability>

Paper with an absolute dry mass of 50 g was manually torn to about 2 cm square, and diluted with tap water to a paper concentration of 2.5 mass%, followed by disintegration treatment at 20°C and 3,000 rpm for 5 minutes. The obtained pulp slurry was provided to a flat screen (manufactured by KUMAGAI RIKI KOGYO Co., Ltd.) on which a screen plate with 6 cuts (slit width 0.15 mm) was set, and fine selection treatment was performed in a water flow at 8.3 L/min for 15 minutes. Non-disintegrated matter remaining on the screen plate was collected, and dried in an oven at 105°C, the absolute dry mass thereof was measured, and the recycling ratio was calculated from the following calculation expression.

Recycling ratio (%) = 100 × {absolute dry mass of paper provided for test (g) - absolute dry mass of non-disintegrated matter (g)}/absolute dry mass of paper provided for test.

<Moldability (top curl processability)>

The obtained water-resistant paper was molded into a cup shape such that the surface was on the inner side (surface to be contacted with a liquid) and the back surface was on the outer side (print surface) and that the cross direction (CD) of the constituent paper substrate was the horizontal direction of the cup, and the moldability of the top curl portion of the cup which was subjected to top curl treatment was evaluated on the basis of the following criteria. The top curl treatment was performed by the following method.

A mold was applied to the peripheral edge of the opening at the upper end of the cup to widen the opening, and mold having a curl shape with a curl diameter of about 3 mm was applied to curl the cup toward the outside. Subsequently, the cup was pushed downward to drag the substrate inward along the curved surface of the mold having a curl shape and set on the lower side. The processability was evaluated on the basis of the following criteria.

10,000 paper cups were formed by the above-described method, defects of top curl portions (breakage, paper layer peeling, insufficient curl and wrinkles) were examined, and the percentage of defects of top curl portions was calculated by the expression of percentage of defects (%) = (number of defectives/number of paper cups formed) $\times$ 100.

[Evaluation criteria]

A: The percentage of defects of top curl portions was 1% or less (no problem for practical use).
B: The percentage of defects of top curl portions was more than 1% and 2% or less (no problem for practical use).
C: The percentage of defects of top curl portions was more than 2% and 3% or less (no problem for practical use).
D: The percentage of defects of top curl portions was more than 3% and 5% or less (no problem for practical use).
E: The percentage of defects of top curl portions was more than 5% and 10% or less (a little unfavorable for practical use).
F: The percentage of defects of top curl portions was more than 10% (unfavorable for practical use).

[Table 1]

Table 1

| | | | | | Example | | | | | | | | | | | | | | | | Comparative Example | | |
|---|---|---|---|---|---|---|---|---|---|---|---|---|---|---|---|---|---|---|---|---|---|---|---|---|
| | | | | | 1-1 | 1-2 | 1-3 | 1-4 | 1-5 | 1-6 | 1-7 | 1-8 | 1-9 | 1-10 | 1-11 | 1-12 | 1-13 | 1-14 | 1-15 | 1-16 | 1-1 | 1-2 | 1-3 |
| Paper substrate | Runkel ratio | Pulp | NBKP | - | 0.85 | 0.85 | 0.85 | 0.85 | 0.85 | 0.85 | 0.85 | 0.85 | 0.85 | 0.85 | 0.85 | 0.85 | 0.85 | 0.85 | 0.85 | 0.85 | 0.60 | 0.85 | 0.85 |
| | | | LBKP | - | 0.29 | 0.29 | 0.29 | 0.29 | 0.29 | 0.29 | 0.29 | 0.29 | 0.29 | 0.29 | 0.29 | 0.29 | 0.29 | 0.29 | 0.29 | 0.29 | 0.29 | 0.29 | 0.29 |
| | | Average in paper substrate | | - | 0.40 | 0.35 | 0.48 | 0.40 | 0.40 | 0.40 | 0.40 | 0.40 | 0.40 | 0.40 | 0.40 | 0.40 | 0.40 | 0.40 | 0.40 | 0.40 | 0.65 | 0.54 | 0.40 |
| | Pulp formulation | Outermost layer (first layer/fifth layer) 40g/m² | NBKP | mass% | 10 | 0 | 20 | 10 | 10 | 10 | 10 | 10 | 10 | 10 | 10 | 10 | 10 | 10 | 10 | 10 | 10 | 45 | 10 |
| | | | LBKP | mass% | 90 | 100 | 80 | 90 | 90 | 90 | 90 | 90 | 90 | 90 | 90 | 90 | 90 | 90 | 90 | 90 | 90 | 55 | 90 |
| | | Inner layer (second layer/fourth layer) 40g/m² | NBKP | mass% | 20 | 0 | 40 | 20 | 20 | 20 | 20 | 20 | 20 | 20 | 20 | 20 | 20 | 20 | 20 | 20 | 20 | 45 | 20 |
| | | | LBKP | mass% | 80 | 100 | 60 | 80 | 80 | 80 | 80 | 80 | 80 | 80 | 80 | 80 | 80 | 80 | 80 | 80 | 80 | 55 | 80 |
| | | Inner layer (third layer) 90g/m² | NBKP | mass% | 30 | 30 | 40 | 30 | 30 | 30 | 30 | 30 | 30 | 30 | 30 | 30 | 30 | 30 | 30 | 30 | 30 | 45 | 30 |
| | | | LBKP | mass% | 70 | 70 | 60 | 70 | 70 | 70 | 70 | 70 | 70 | 70 | 70 | 70 | 70 | 70 | 70 | 70 | 70 | 55 | 70 |
| | | All layer pulp formulation | NBKP | mass% | 20 | 11 | 34 | 20 | 20 | 20 | 20 | 20 | 20 | 20 | 20 | 20 | 20 | 20 | 20 | 20 | 20 | 45 | 20 |
| | | | LBKP | mass% | 80 | 89 | 66 | 80 | 80 | 80 | 80 | 80 | 80 | 80 | 80 | 80 | 80 | 80 | 80 | 80 | 80 | 55 | 80 |
| Undercoat paper | Undercoat layer (surface) | Coating solution | | - | A | A | A | A | A | A | B | A | A | A | A | A | A | A | A | A | A | A | A |
| | | Coating amount | | g/m² | 5.0 | 5.0 | 5.0 | 10.0 | 5.0 | 5.0 | 5.0 | 5.0 | 5.0 | 5.0 | 5.0 | 5.0 | 5.0 | 10.0 | 5.0 | 5.0 | 5.0 | 5.0 | 5.0 |
| | Undercoat layer (back surface) | Coating solution | | - | A | A | A | A | A | A | B | A | A | A | A | A | A | A | A | A | A | A | A |
| | | Coating amount | | g/m² | 5.0 | 5.0 | 5.0 | 10.0 | 5.0 | 5.0 | 5.0 | 5.0 | 5.0 | 5.0 | 5.0 | 5.0 | 5.0 | 5.0 | 20.0 | 5.0 | 5.0 | 5.0 | 5.0 |
| | Basis weight | | | g/m² | 260 | 260 | 260 | 270 | 260 | 260 | 260 | 260 | 260 | 260 | 260 | 260 | 260 | 265 | 275 | 260 | 260 | 260 | 260 |
| | Paper thickness | | | μm | 305 | 305 | 305 | 310 | 305 | 305 | 305 | 305 | 305 | 305 | 305 | 305 | 305 | 308 | 318 | 305 | 316 | 310 | 305 |
| | Density | | | g/cm³ | 0.85 | 0.85 | 0.85 | 0.87 | 0.85 | 0.85 | 0.85 | 0.85 | 0.85 | 0.85 | 0.85 | 0.85 | 0.85 | 0.86 | 0.86 | 0.85 | 0.82 | 0.84 | 0.85 |
| | Smoothness (Oken) | Surface | | Sec | 60 | 67 | 50 | 130 | 60 | 60 | 60 | 60 | 60 | 60 | 60 | 60 | 60 | 130 | 60 | 60 | 34 | 29 | 60 |
| | | Back surface | | Sec | 25 | 28 | 21 | 40 | 25 | 25 | 25 | 25 | 25 | 25 | 25 | 25 | 25 | 25 | 150 | 25 | 15 | 14 | 25 |
| Water-resistant layer | Water-resistant layer (surface) | Coating solution | | - | D | D | D | D | D | D | D | F | H | J | L | N | D | D | D | Q | D | D | D |
| | | Coating amount | | g/m² | 5.0 | 5.0 | 5.0 | 5.0 | 6.0 | 8.0 | 5.0 | 8.0 | 8.0 | 8.0 | 8.0 | 8.0 | 5.0 | 5.0 | 5.0 | 9.0 | 5.0 | 5.0 | 4.0 |
| | Water-resistant layer (back surface) | Coating solution | | - | C | C | C | C | C | C | C | E | G | I | K | M | - | C | C | P | C | C | C |
| | | Coating amount | | g/m² | 3.0 | 3.0 | 3.0 | 3.0 | 3.0 | 3.0 | 3.0 | 3.0 | 3.0 | 3.0 | 3.0 | 3.0 | - | 3.0 | 3.0 | 3.0 | 3.0 | 3.0 | 3.0 |
| | Total coating amount (surface and back surface) | | | g/m² | 8.0 | 8.0 | 8.0 | 8.0 | 9.0 | 11.0 | 8.0 | 11.0 | 11.0 | 11.0 | 11.0 | 11.0 | 5.0 | 8.0 | 8.0 | 12.0 | 8.0 | 8.0 | 7.0 |
| A water-resistant paper | Basis weight | | | g/m² | 268 | 268 | 268 | 278 | 269 | 271 | 268 | 271 | 271 | 271 | 271 | 271 | 265 | 273 | 283 | 272 | 268 | 268 | 267 |
| | Paper thickness | | | μm | 313 | 313 | 313 | 318 | 314 | 315 | 313 | 315 | 315 | 315 | 315 | 315 | 310 | 316 | 326 | 316 | 324 | 318 | 312 |
| | Density | | | g/cm³ | 0.86 | 0.86 | 0.86 | 0.88 | 0.86 | 0.86 | 0.86 | 0.86 | 0.86 | 0.86 | 0.86 | 0.86 | 0.86 | 0.87 | 0.87 | 0.86 | 0.83 | 0.84 | 0.86 |
| | Cobb water absorptiveness (surface) | 20°C | | g/m² | 3.2 | 2.5 | 4.0 | 1.9 | 1.7 | 1.4 | 2.8 | 5.3 | 2.1 | 1.9 | 1.5 | 1.8 | 3.4 | 1.9 | 3.2 | 1.9 | 11.2 | 10.3 | 11.5 |
| | | 90°C | | g/m² | 11.1 | 8.9 | 13.1 | 6.3 | 4.9 | 2.6 | 9.8 | 8.7 | 3.1 | 2.8 | 2.9 | 2.4 | 11.0 | 11.0 | 11.1 | 2.8 | 21.5 | 25.6 | 23.4 |
| | Kit value | | | - | 8 | 9 | 8 | 10 | 11 | 12 | 10 | 12 | 11 | 12 | 11 | 10 | 8 | 10 | 8 | 12 | 3 | 2 | 1 |
| | Heat-sealing properties | | | A-E | B | B | B | B | A | A | A | A | A | A | A | A | A | B | B | B | A | C | C |
| | Recycling ratio | | | % | 91 | 92 | 90 | 92 | 88 | 86 | 91 | 87 | 85 | 84 | 84 | 85 | 95 | 92 | 91 | 84 | 85 | 87 | 95 |
| | Moldability | | | A-F | C | C | C | C | B | A | B | A | A | A | A | A | D | C | C | A | E | E | F |

In Examples 1-1 to 1-16 and Comparative Examples 1-1 to 1-3, the basis weight of the paper substrate was 250 g/m$^2$, and the pulp freeness (CSF) is as follows.

> Outermost layer (first layer/fifth layer): NBKP 500 mL, LBKP 400 mL
> Inner layer (second layer/fourth layer): NBKP 525 mL, LBKP 425 mL
> Inner layer (third layer): NBKP 600 mL, LBKP 475 mL

[Table 2]

Table 2

| | | | | Example | | | | | | Comparative Example | | | |
|---|---|---|---|---|---|---|---|---|---|---|---|---|---|
| | | | | 2-1 | 2-2 | 2-3 | 2-4 | 2-5 | 2-6 | 2-1 | 2-2 | 2-3 | 2-4 |
| Paper substrate | Runkel ratio | NBKP | - | 0.85 | 0.85 | 0.85 | 0.85 | 0.85 | 0.85 | 0.85 | 0.85 | 0.85 | 0.85 |
| | | LBKP | - | 0.29 | 0.29 | 0.29 | 0.29 | 0.29 | 0.29 | 0.60 | 0.29 | 0.29 | 0.29 |
| | | average | - | 0.40 | 0.48 | 0.40 | 0.40 | 0.40 | 0.40 | 0.65 | 0.54 | 0.40 | 0.40 |
| | Pulp formulation | NBKP | mass% | 20 | 34 | 20 | 20 | 20 | 20 | 20 | 45 | 20 | 20 |
| | | LBKP | mass% | 80 | 66 | 80 | 80 | 80 | 80 | 80 | 55 | 80 | 80 |
| Undercoat layer | Undercoat layer (surface)(back surface) | pigment (heavy carbon*1/kaolin) | mass ratio | 70/30 | 70/30 | 70/30 | 70/30 | 70/30 | 70/30 | 70/30 | 70/30 | - | - |
| | | latex | parts by mass*2 | 15 | 15 | 15 | 15 | 15 | 15 | 15 | 15 | - | - |
| | Undercoat layer 1 (surface) | Coating amount | $g/m^2$ | 10.0 | 10.0 | 10.0 | 5.0 | 10.0 | 10.0 | 10.0 | 10.0 | - | - |
| | Undercoat layer 2 (back surface) | Coating amount | $g/m^2$ | 10.0 | 10.0 | 10.0 | 5.0 | 10.0 | 10.0 | 10.0 | 10.0 | - | - |
| Undercoat paper | Basis weight | | $g/m^2$ | 270 | 270 | 270 | 260 | 270 | 270 | 270 | 270 | 250 | 250 |
| | Paper thickness | | $\mu$m | 300 | 300 | 300 | 295 | 300 | 300 | 300 | 300 | 290 | 290 |
| | Density | | $g/cm^3$ | 0.90 | 0.90 | 0.90 | 0.88 | 0.90 | 0.90 | 0.90 | 0.90 | 0.86 | 0.86 |
| | Oken smoothness | surface | sec | 40 | 33 | 40 | 35 | 40 | 40 | 15 | 13 | 10 | 10 |
| | | back surface | sec | 130 | 108 | 130 | 63 | 130 | 130 | 34 | 31 | 15 | 15 |
| Water-resistant layer | Water-resistant layer 1 (surface) | Coating amount | $g/m^2$ | 8.0 | 8.0 | 5.0 | 8.0 | 13.0 | 8.0 | 8.0 | 8.0 | 8.0 | 22.0*3 |
| | Water-resistant layer 2 (back surface) | Coating amount | $g/m^2$ | 5.0 | 5.0 | 5.0 | 5.0 | 13.0 | 3.0 | 5.0 | 5.0 | 5.0 | 17.0*3 |
| | Total deposition amount (surface and back surface) | | $g/m^2$ | 13.0 | 13.0 | 10.0 | 13.0 | 26.0 | 11.0 | 13.0 | 13.0 | 13.0 | 39.0 |
| | Basis weight | | $g/m^2$ | 283 | 283 | 280 | 273 | 296 | 281 | 283 | 283 | 263 | 289 |

|  |  |  |  |  | Example | | | | | | Comparative Example | | | |
|---|---|---|---|---|---|---|---|---|---|---|---|---|---|---|
|  |  |  |  |  | 2-1 | 2-2 | 2-3 | 2-4 | 2-5 | 2-6 | 2-1 | 2-2 | 2-3 | 2-4 |
| A water-re-sistant pa-per | Paper thickness | | | μm | 313 | 313 | 310 | 308 | 326 | 311 | 313 | 313 | 303 | 329 |
| | Density | | | g/m³ | 0.90 | 0.90 | 0.90 | 0.89 | 0.91 | 0.90 | 0.90 | 0.90 | 0.87 | 0.88 |
| | Cobb water absorptiveness contact time: 30 min | surface | 20°C | g/m² | 0.6 | 1.2 | 7.8 | 5.5 | 1.6 | 0.6 | 13.6 | 16.1 | 17.2 | 0 |
| | | | 90°C | g/m² | 2.9 | 3.6 | 9.5 | 9.8 | 3.9 | 2.9 | 24.6 | 27.8 | 29.7 | 0 |
| | | back surface | 20°C | g/m² | 1.1 | 1.8 | 1.6 | 2.1 | 3.3 | 58.4 | 43.6 | 50.1 | 55.4 | 0 |
| | Oken smoothness | surface | | sec | 105 | 87 | 80 | 43 | 225 | 80 | 25 | 22 | 21 | 765 |
| | | back surface | | sec | 165 | 136 | 165 | 97 | 358 | 132 | 42 | 38 | 27 | 45 |
| | Kit value | | | - | 12 | 12 | 8 | 8 | 12 | 12 | 3 | 2 | 2 | 12 |
| | Heat-sealing properties | | | A-E | B | B | C | B | A | B | C | C | B | A |
| | Recycling ratio | | | % | 85 | 83 | 90 | 79 | 72 | 89 | 83 | 82 | 76 | 68 |
| | Moldability | | | A-F | B | B | D | C | B | A | E | E | A | A |

*1: Heavy calcium carbonate
*2: Added amount (parts by mass) per 100 parts by mass of pigment
*3: Deposition amount of LDPE

In Examples 2-1 to 2-6 and Comparative Examples 2-1 to 2-4, the areal weight of each layer, the pulp freeness (CSF), and the types and the added amounts of internal point chemicals are as follows.

(Areal weight of each layer)

First layer: 40 g/m$^2$, second layer: 40 g/m$^2$, third layer: 90 g/m$^2$, fourth layer: 40 g/m$^2$, fifth layer: 40 g/m$^2$, total amount: 250 g/m$^2$

(Pulp freeness)

Outermost layer (first layer/fifth layer): NBKP 500 mL, LBKP 450 mL
Inner layer (second to fourth layers): NBKP 500 mL, LBKP 500 mL

(Type and added amount of internal point chemical)

Wet paper strengthening agent: PAE (polyamide polyamine epichlorohydrin resin), 0.15 parts by mass per 100 parts by mass of pulp (dry mass)
Dry paper strengthening agent: cationized starch, 0.70 parts by mass per 100 parts by mass of pulp (dry mass)
Sizing agent: rosin, 0.85 parts by mass per 100 parts by mass of pulp (dry mass)

The water-resistant papers obtained in Examples 1-1 to 1-16 and 2-1 to 2-6 were disintegrated, and the Runkel ratio of pulp forming the paper substrate was measured. The results showed that the Runkel ratio was 0.51 or less in all Examples.

As is apparent from the results of Tables 1 and 2, the water-resistant papers of Examples 1-1 to 1-13 and 2-1 to 2-6 which contained the undercoat layer 1 and the water-resistant layer 1 in the stated order on at least one surface of a paper substrate and in which the average Runkel ratio of pulp forming the paper substrate was 0.51 or less, the undercoat layer 1 contained latex and a pigment and the coating amount of the water-resistant layer 1 was 4.5 g/m$^2$ or more, had excellent water resistance against cold water and hot water, and oil resistance on at least a surface having the water-resistant layer 1, and had excellent heat-sealing properties and recyclability, and excellent moldability (top curl processability).

On the other hand, the water-resistant papers of Comparative Examples 1-1, 1-2, 2-1 and 2-2 in which the Runkel ratio of pulp forming a paper substrate was more than 0.51 had poor water resistance and oil resistance, and poor moldability (top curl processability). Furthermore, the water-resistant paper of Comparative Example 1-3 in which the coating amount of the water-resistant layer was less than 4.5 g/m$^2$ had poor water resistance and oil resistance, and poor moldability (top curl processability). The water-resistant paper of Comparative Example 2-3 which did not comprise the undercoat layer 1 and the undercoat layer 2 had poor water resistance (high Cobb water absorptiveness). The water-resistant paper of Comparative Example 2-4 which did not comprise the undercoat layer 1 and the undercoat layer 2 and which contained LDPE laminated layers as the water-resistant layer 1 and the water-resistant layer 2 was poor in recyclability of pulp forming a paper substrate.

**Claims**

1. A water-resistant paper comprising:

   a paper substrate; and
   an undercoat layer 1 and a water-resistant layer 1 on one surface of the paper substrate in the stated order from the paper substrate side,
   wherein an average Runkel ratio of pulp forming the paper substrate is 0.51 or less,
   wherein the undercoat layer 1 comprises latex and a pigment, and
   wherein a coating amount of the water-resistant layer 1 is 4.5 g/m$^2$ or more.

2. The water-resistant paper according to claim 1, wherein a pulp raw material forming the paper substrate comprises at least one selected from the group consisting of bleached hardwood kraft pulp (LBKP) and bleached softwood kraft pulp (NBKP), and wherein a mass ratio of the bleached hardwood kraft pulp (LBKP) and the bleached softwood kraft pulp (NBKP) (LBKP/NBKP) is 60/40 or more and 100/0 or less.

3. The water-resistant paper according to claim 1 or 2, wherein in the undercoat layer 1, a mass ratio of the latex to the pigment (latex/pigment) is 10/90 or more and 40/60 or less.

4. The water-resistant paper according to any one of claims 1 to 3, wherein the water-resistant layer 1 comprises at least one selected from the group consisting of a polyolefin-based resin and an acryl-based resin.

5. The water-resistant paper according to any one of claims 1 to 4, wherein the paper substrate comprises a starch-based dry paper strengthening agent.

6. The water-resistant paper according to any one of claims 1 to 5, wherein a basis weight of the paper substrate is 200 g/m$^2$ or more.

7. The water-resistant paper according to any one of claims 1 to 6, wherein the water-resistant paper has a Cobb water absorptiveness of 10 g/m$^2$ or less on the surface having the water-resistant layer 1 when contacted with water at 20°C for 30 minutes.

8. The water-resistant paper according to any one of claims 1 to 7, wherein the water-resistant paper has a Cobb water absorptiveness of 20 g/m$^2$ or less on the surface having the water-resistant layer 1 when contacted with water at 90°C for 30 minutes.

9. The water-resistant paper according to any one of claims 1 to 8, wherein the water-resistant paper has a Kit value of 5 or more on the surface having the water-resistant layer 1.

10. The water-resistant paper according to any one of claims 1 to 9, which comprises, on the other surface of the paper substrate, at least one of an undercoat layer 2 and a water-resistant layer 2.

11. The water-resistant paper according to claim 10, which comprises, on the other surface of the paper substrate, the undercoat layer 2 and the water-resistant layer 2 in the stated order from the paper substrate side.

12. The water-resistant paper according to claim 10 or 11, wherein the undercoat layer 2 comprises latex and a pigment.

13. The water-resistant paper according to any one of claims 10 to 12, wherein the water-resistant layer 1 and the water-resistant layer 2 comprise aqueous resins of the same type.

14. The water-resistant paper according to any one of claims 10 to 13, wherein a coating amount of the water-resistant layer 2 is 5.0 g/m$^2$ or less.

15. The water-resistant paper according to any one of claims 10 to 14, wherein a coating amount of the water-resistant layer 2 is 4 g/m$^2$ or more.

16. The water-resistant paper according to any one of claims 10 to 15, wherein a total coating amount of the water-resistant layer 1 and the water-resistant layer 2 is 20 g/m$^2$ or less.

17. The water-resistant paper according to any one of claims 1 to 16, which is used for a packaging container.

18. A packaging container obtained using the water-resistant paper according to any one of claims 1 to 17.

## INTERNATIONAL SEARCH REPORT

| | International application No. |
|---|---|
| | **PCT/JP2023/046718** |

**A. CLASSIFICATION OF SUBJECT MATTER**

*D21H 19/84*(2006.01)i; *B32B 27/10*(2006.01)i; *B65D 65/42*(2006.01)i; *D21H 15/02*(2006.01)i; *D21H 19/20*(2006.01)i;
*D21H 19/56*(2006.01)i; *D21H 19/82*(2006.01)i; *D21H 21/18*(2006.01)i; *D21H 27/10*(2006.01)i
FI: D21H19/84; B32B27/10; B65D65/42 A; D21H15/02; D21H19/20; D21H19/56; D21H19/82; D21H21/18; D21H27/10

According to International Patent Classification (IPC) or to both national classification and IPC

**B. FIELDS SEARCHED**

Minimum documentation searched (classification system followed by classification symbols)

B32B1/00-43/00, B65D65/00-65/46, D21B1/00-1/38, D21C1/00-11/14, D21D1/00-99/00, D21F1/00-13/12, D21G1/00-9/00,
D21H11/00-27/42, D21J1/00-7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2022-123844 A (OJI HOLDINGS CORPORATION) 24 August 2022 (2022-08-24) | 1-18 |
| A | JP 2022-518707 A (STORA ENSO OYJ) 16 March 2022 (2022-03-16) | 1-18 |
| A | WO 2022/113988 A1 (OJI HOLDINGS CORPORATION) 02 June 2022 (2022-06-02) | 1-18 |
| A | US 5989724 A (INTERNATIONAL PAPER COMPANY) 23 November 1999 (1999-11-23) | 1-18 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/046718**

| Patent document cited in search report | | | Publication date (day/month/year) | Patent family member(s) | | | Publication date (day/month/year) |
|---|---|---|---|---|---|---|---|
| JP | 2022-123844 | A | 24 August 2022 | (Family: none) | | | |
| JP | 2022-518707 | A | 16 March 2022 | US | 2022/0162804 | A1 | |
| | | | | WO | 2020/152635 | A1 | |
| | | | | EP | 3914770 | A1 | |
| | | | | SE | 1950089 | A | |
| | | | | CN | 113330160 | A | |
| WO | 2022/113988 | A1 | 02 June 2022 | (Family: none) | | | |
| US | 5989724 | A | 23 November 1999 | WO | 1994/026513 | A1 | |
| | | | | EP | 718437 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6580291 B